# EUROPEAN PATENT APPLICATION

(11) **EP 4 815 230 A1**
(43) Date of publication of application: **30.09.2026**
(21) Application number: 26167954.2
(22) Date of filing: 26.03.2026
(51) Int. Cl.: H02G 3/14, H02G 3/08, H02G 3/12, H02G 3/18

(54) **INTEGRATED SOCKET**

(30) Priority: 27.03.2025 BE 202505178; 29.09.2025 BE 202505657
(71) Applicant: Orbis Design BV, 9420 Erpe-Mere (BE)
(72) Inventor: DE BACKER, Filip, 9420 ERPE-MERE (BE); VAN CANEGHEM, Wouter, 9420 ERPE-MERE (BE)
(74) Representative: Patentales BV

(57) **Abstract**

The present invention relates to an integrated socket suitable for incorporation into, for example, stone or stone-like material, in particular slabs or tiles. In addition, the invention also relates to a method for installing such sockets, as well as their use, and to a disconnecting element and a cover plate.

## Description

### TECHNICAL FIELD

The field of the invention relates to electrical installations, in particular a system suitable for embedding a socket into a stone or stone-like wall, for example a worktop, splash back or wall. The system is designed to facilitate the integration of a socket into a wall opening, thereby ensuring safe installation and alignment. It comprises an embedding element with a passage for the socket, a socket with detachable coupling features, and a cover plate. Preferably, this is a cover plate with a stone or stone-like front, but it should be clear that the invention can be applied to, for example, other types of material. The invention addresses the need for aesthetically appealing and mechanically secure installations of sockets suitable for use in stone or stone-like surfaces. In embodiments, the system is characterized by magnetic coupling elements for the cover plate, thereby improving the fastening and release possibilities.

### STATE OF THE ART

In the current state of the art, installing sockets in stone or stone-like walls presents various challenges. Traditional systems often require complex and labor-intensive installation processes, which may necessitate precise alignment and secure attachment of components. These systems can be difficult to install, particularly in hard, dense materials such as stone, where drilling and attaching elements can be difficult and time-consuming.

Furthermore, achieving seamless aesthetic integration of the socket with the wall surface is often problematic, as conventional solutions may not provide a visually appealing finish. The cover plates typically used are made of plastic and stand out due to the stark contrast with the stone or stone-like wall. Even with an appropriate choice of color, it is very difficult to convincingly replicate the texture and appearance of stone using plastic.

Furthermore, ensuring the secure attachment of the socket and its components whilst simultaneously allowing for easy maintenance or replacement presents a significant challenge. This is particularly true for systems where the socket must be removable or adjustable without compromising the structural integrity or aesthetic appearance of the wall.

The need for a reliable, efficient and aesthetically appealing solution suitable for embedding sockets in stone or stone-like walls remains unmet in the current technological landscape.

BE1027477B1 and WO2024105598A1 disclose related systems but are insufficiently flexible in terms of installation and/or use.

The present invention aims to provide a solution to at least some of the aforementioned problems.

### SUMMARY OF THE INVENTION

According to a first aspect, the invention relates to a system for installing a socket into a wall with a through-opening, comprising:
a. a built-in element, the built-in element comprising a plate with a front side and a rear side, and a passage, which passage extends from the front side to the rear side of the plate, the passage being dimensioned to accommodate a socket, and wherein the built-in element further comprises a receiving element, wherein the front side of the plate is adapted for attachment to the rear side of the wall with the passage aligned with the through-opening in the wall, wherein the receiving element extends around the passage on the rear side;
b. a socket, suitable for detachable coupling within the passage of the built-in element, the socket comprising a front side and a rear side, the rear side comprising contact points for electrically connecting electrical wiring to the socket, and the front side comprising a coupling suitable for receiving a plug, wherein the socket comprises a screw opening for receiving a screw and for coupling the socket to the receiving element by means of the screw;
c. a cover plate dimensioned to cover the front side of the socket in the built-in element and to be recessed within the wall opening.

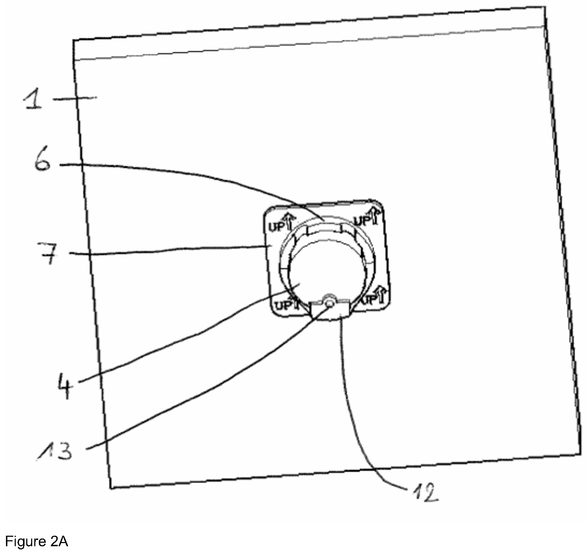

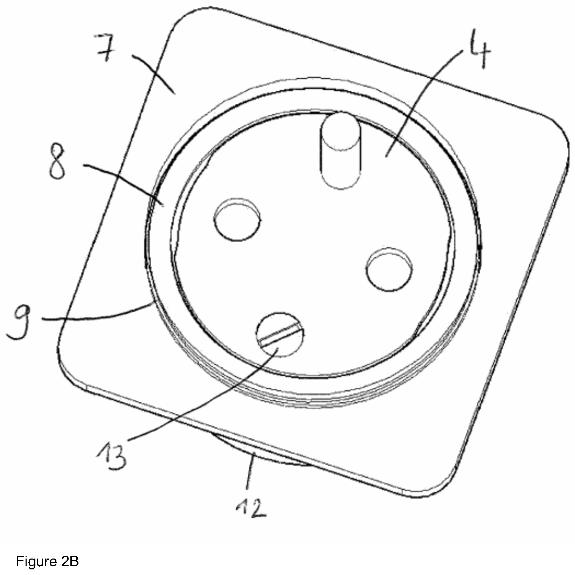

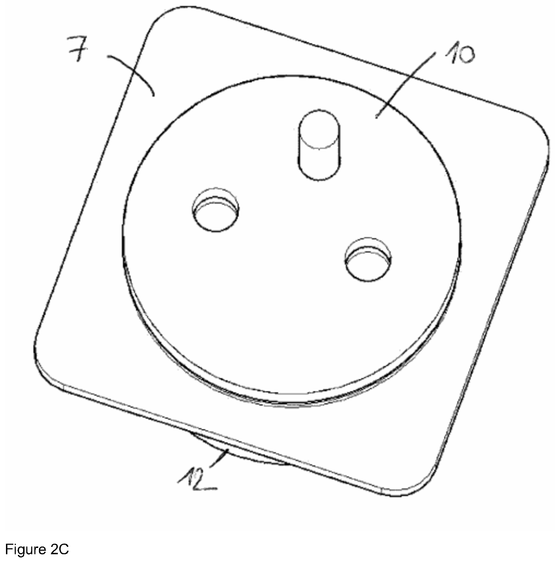

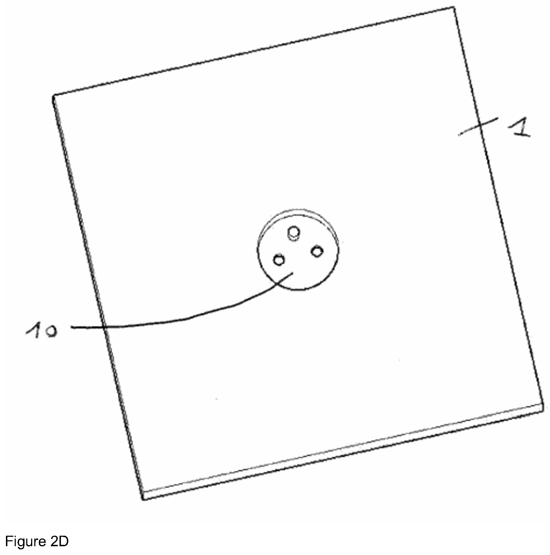

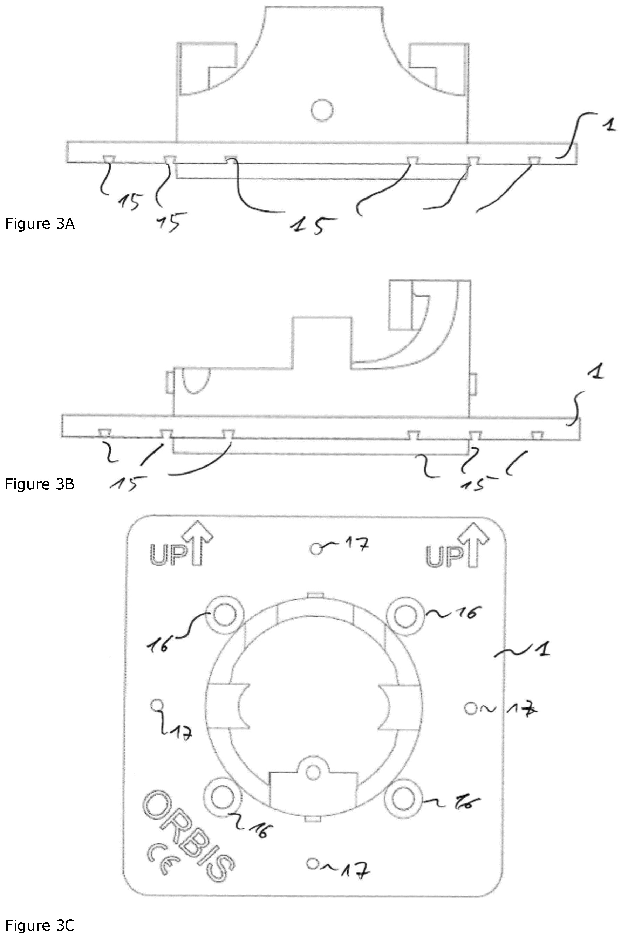

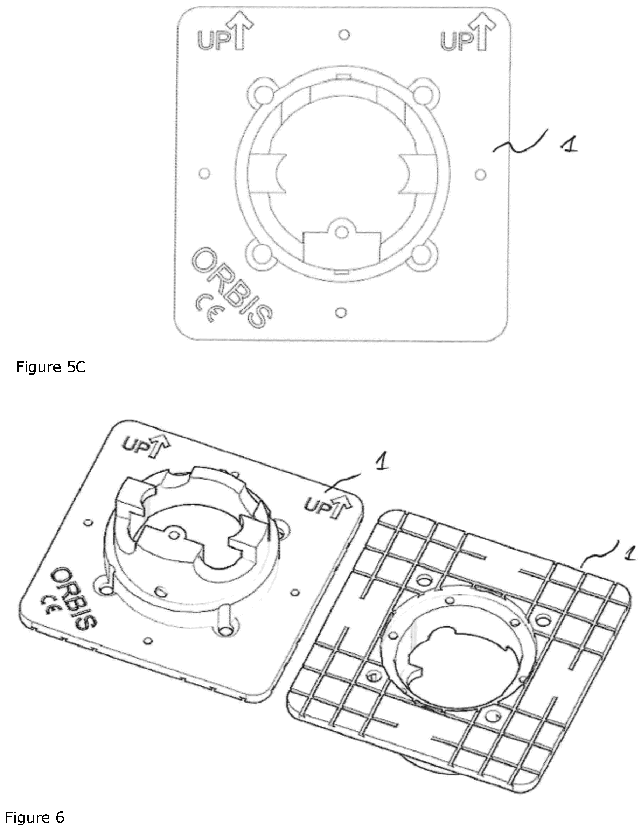

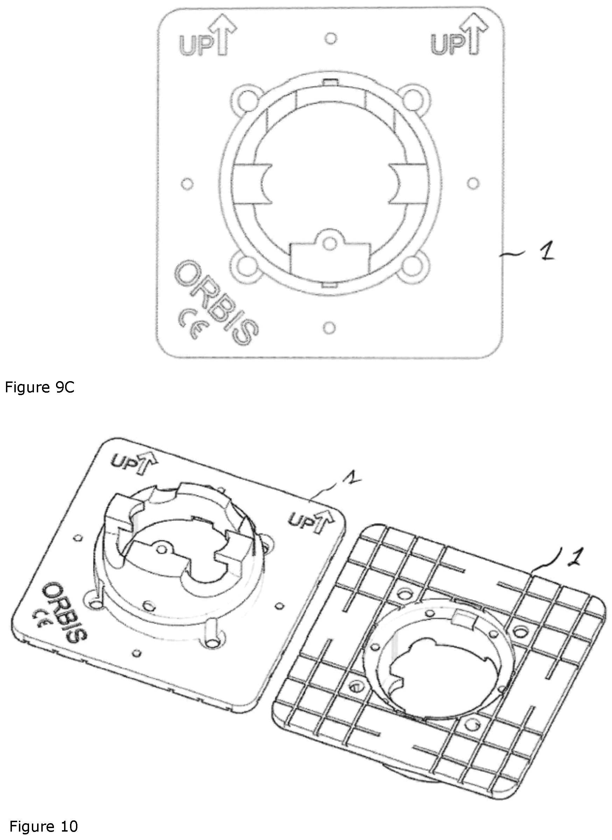

The invention further relates to the system according to claim 1. Such a system can offer various advantages when the front side of the cover plate consists of a fragile material, such as stone or a stone-like material. It may be particularly advantageous for the cover plate to comprise reinforcement, specifically a ring-shaped reinforcing element forming an integral part of the cover plate, wherein the structural integrity is protected not only when in use in the mounted state, but also when not mounted and during assembly. A further advantage may relate to the method of assembly made possible by this system, wherein the cover plate, which may be fragile, is only added at the very end, and is removed first during disassembly, thereby reducing the risk of breakage. Furthermore, this sequence may be advantageous when positioning or replacing the cover plate, particularly in examples where the front side of the cover plate features a pattern (e.g. a vein structure) which must align with (for example) the pattern of the surrounding wall. In such cases, this positioning, which often constitutes a challenging aspect of the assembly, can proceed smoothly without the need to carry out other steps. It should be noted that the state of the art does not allow this. For example, BE1027477B1 describes in Fig. 2 an element 130a which is only added at the very end, which complicates positioning, and must first be removed before repositioning or disassembly can take place. And in WO2024105598A1, element 20 in Fig. 3 is only added at the very end, which complicates positioning, and must first be removed before it can be repositioned or disassembled. Specifically, this removal of element 20 requires difficult manipulation via a recess 15 as shown in Fig. 6 of WO2024105598A1. In contrast, the system according to the invention allows for smooth and direct removal of the cover plate. It can be easily removed using a release element based on, for example, plugs, which is not described anywhere in the state of the art, as the prior art does not allow for the direct removal of a cover plate. For instance, BE1027477B1 does not describe a release element, and element 23 in Figure 10 of WO2024105598A1 does not relate to a release element for releasing the cover plate, since, on the contrary, element 23 is used to release the entire socket. Furthermore, element 23 does not have any plugs.

The invention according to claim 1 is thereby not described or suggested by BE1027477B1, because BE1027477B1 does not describe or suggest a cover plate which comprises, on its rear side, a reinforcement for the structural integrity of the cover plate, wherein said reinforcement comprises a reinforcing element which is ring-shaped, and has an outer perimeter which substantially matches the outer perimeter of the front side of the socket, wherein said means for detachably coupling are related to clamping and/or magnetic coupling of said reinforcement to said built-in element.

Furthermore, the invention according to claim 1 is not described or suggested by WO2024105598A1, as WO2024105598A1 does not describe or suggest a cover plate comprising, on its rear side, reinforcement for the structural integrity of the cover plate, wherein said reinforcement comprises a reinforcing element which is ring-shaped, and has an outer perimeter which substantially matches the outer perimeter of the front side of the socket, wherein said means for detachably coupling are related to clamping and/or magnetic coupling of said reinforcement to said built-in element.

The receiving element is suitable for detachably receiving the socket and coupling the socket to the receiving element. Preferably, the detachably receiving to a screw. Note that the screw-based coupling may also be implemented in other ways, such as a complementary connection between the receiving element and the socket, such as a snap-fit, a screw connection or bayonet coupling, clamping, etc. The cover plate comprises a front side which is preferably visually similar to a front side of the wall (typically made of the same material as the wall).

In preferred embodiments, the built-in element and the cover plate are provided with means for detachable coupling to one another. In alternative embodiments, the built-in element and the cover plate are connected to one another by means of a permanent attachment.

In preferred embodiments in which the built-in element and the cover plate are detachably connected to one another, the built-in element is thereto provided with a first coupling element on the front side, and the cover plate is thereto provided with a second coupling element behind the front side, wherein at least one of the first and second coupling elements is magnetic, and wherein both the first and second coupling elements are magnetizable, and wherein the first coupling element and the second coupling element are configured for magnetic coupling to one another.

In preferred embodiments, the material of the wall and the cover plate is visually similar or even identical, which enables an aesthetic, balanced finish. In this context, for example, both the wall and the cover plate are made from the same stone or from the same stone-like material.

In preferred embodiments, the wall is a stone or stone-like wall and/or the cover plate has a stone or stone-like front side.

It should be clear, however, that the invention can be applied to other types of material. In embodiments, the material for the front side of the wall (preferably, the wall) relates to one or more of: natural stone, composite material, ceramics such as porcelain or alumina, solid surface material, solid core material, HI-MACS, Corian, wood, metal, steel, thermoplastic material (e.g., PC, Nylon, ABS), PVC, rubber (vulcanized or neoprene). In embodiments, the material for the front side of the cover plate relates to one or more of: natural stone, composite material, ceramics such as porcelain or alumina, solid surface material, solid-core material, HI-MACS, Corian, wood, metal, steel, thermoplastic material (e.g., PC, Nylon, ABS), PVC, rubber (vulcanized or neoprene). In all these embodiments, regardless of the specific material, the material of the wall (or at least the front side of the wall) and the front side of the cover plate are preferably visually similar or even identical, in order to achieve an aesthetic, balanced finish.

In a second aspect, the invention relates to a method for installing a socket into a wall with a through-opening, comprising the following steps:
a. providing a through-opening in a stone or stone-like wall, preferably a stone or stone-like plate or tile;
b. attaching a built-in element to the rear side of the wall, wherein the built-in element comprises a plate having a front side, a rear side and a passage extending from the front side to the rear side of the plate, wherein the built-in element further comprises a receiving element, wherein the passage and the through-opening are substantially aligned, and wherein the plate is attached to the rear side of the wall, preferably by adhesive bonding;
c. installing a socket through the through-opening and through the passage and coupling said socket to the receiving element;
d. installing a cover plate in the through-opening against the front side of the socket to cover the front side of the socket.

The installation of the cover plate is preferably related to means provided for a detachable connection: preferably, the cover plate is at least provided with a clamping element, and/or the built-in element is at least provided with a first coupling element at the front side, and the cover plate is provided with a second coupling element behind the front side. In some examples, at least one of the first and second coupling elements is magnetic.

Finally, the method comprises a further step of attaching the cover plate to the built-in element by means of the coupling elements.

Preferably, the components in the method relate to those of the system according to the first aspect of the invention.

In a third aspect, the invention relates to the use of the system of the invention for installing a socket into a wall, for example a stone or stone-like wall, wherein the socket is covered by a cover plate which is preferably provided in a similar or identical material, for example the same stone or the same stone-like material.

In a further aspect, the invention provides a release element suitable for use in a system according to the invention and/or suitable for use in a method according to the invention, wherein said release element comprises at least plugs.

According to a further aspect, the invention provides a cover plate suitable for use in a system according to the invention, said cover plate being dimensioned to cover the front side of a socket in a built-in element; said cover plate comprising a front side and means for detachably connecting to the built-in element; wherein the cover plate comprises, at a rear side, a reinforcement for structural integrity of the cover plate, said reinforcement comprising a reinforcement element which is ring-shaped and has an outer perimeter which substantially matches the outer perimeter of the front side of the socket; wherein said means for detachably connecting are related to clamping and/or magnetic coupling of said reinforcement to said built-in element; wherein said ring-shaped reinforcement element is magnetizable; wherein the front side of the cover plate is stone or stone-like; and wherein a diameter of said cover plate comprising said reinforcement is no greater than 41 mm.

### DESCRIPTION OF THE FIGURES

**Figures 1A****-B-C-D** show multiple views (1A-B-C) and a cross-section (1D) of a system according to the invention with a socket therein.
**Figures 2A****-B-C-D** show multiple perspectives of the system at various stages of installation.
**Figures 3A-37** show multiple views of either the system or a component thereof.

### DETAILED DESCRIPTION

Unless otherwise defined, all terms used in the description of the invention, including technical and scientific terms, have the meanings generally understood by a person skilled in the technical field of the invention. For a better understanding of the description of the invention, the following terms are explicitly defined.

"A", "the" and "it" refer in this document to both the singular and the plural unless the context clearly implies otherwise. For example, "a segment" means one or more than one segment.

Where "approximately" or "around" is used in this document in relation to a measurable quantity, a parameter, a duration or point in time, and the like, variations of +/-20% or less are intended, preferably +/-10% or less, more preferably +/-5% or less, even more preferably +/-1% or less, and even more preferably +/-0.1% or less than the cited value, insofar as such variations are applicable in the described invention. It must be understood, however, that the value of the quantity in relation to which the term "approximately" or "around" is used is itself specifically disclosed.

The terms "comprise", "comprising", "consist of", "consisting of", "provided with", "contain", "containing", "include", "including" are synonyms and are inclusive or open terms indicating the presence of what follows, and which do not exclude or preclude the presence of other components, features, elements, members, steps, known from or described in the prior art.

The terms "plates" and "tiles" may refer to stone plates used for kitchen worktops, but equally to tiling or other covering systems.

The citation of numerical ranges by their endpoints comprises all integers, fractions and/or real numbers between the endpoints, including these endpoints.

The present invention relates, in a first aspect, to a system for installing a socket into a stone or stone-like wall, wherein the socket is fully integrated without visible screws or fastening elements. The invention is aimed at improved aesthetics, simple installation and ease of maintenance.

The system comprises a built-in element, a socket and a cover plate. The built-in element consists of a plate with a front side and a rear side and a passage extending from the front side to the rear side. This passage is dimensioned to accommodate the socket. The built-in element further comprises a receiving element extending from the rear side of the passage and serving as a mounting point for the socket. The front side of the plate is attached to the rear side of the stone wall, with the passage aligned with a corresponding through-opening in the wall. The socket is configurable for a detachable connection within the passage of the built-in element. The socket comprises a front side containing a coupling for receiving a plug and a rear side containing contact points for electrical wiring. The socket housing is provided, for example, with a screw opening or a snap-fit closure, e.g. a click system, by means of which the socket is secured to the receiving element. This attachment mechanism ensures a stable installation whilst the socket remains easy to remove for maintenance or replacement.

The cover plate is dimensioned to cover the front side of the socket and is recessed into the through-opening in the wall. The cover plate features, for example, a stone or stone-like front, so that after installation it blends in visually with the surrounding material. Behind the stone front, for example, there is a second coupling element that can be magnetized. In such examples, a key feature is the detachable attachment, for example by means of a magnetic attachment system for the cover plate. In such examples, the built-in element is provided with a first coupling element, whilst the cover plate contains a second coupling element. At least one of these coupling elements is magnetic and both are magnetizable, thereby holding the cover plate firmly in place without mechanical fastening element. This ensures seamless integration and easy removal when access to the socket is required.

Installation typically involves several steps. First, a through-opening of a suitable diameter is provided in the stone wall; the standard diameter is, for example, 40 mm. Next, the built-in element is attached with its front side to the rear side of the wall, so that the passage is aligned with the through-opening in the wall. This is preferably done using adhesive bonding. The socket is then inserted through the passage and secured to the receiving element with a single screw. Finally, the cover plate is fitted into the through-opening in the wall, wherein the magnetic coupling mechanism ensures that the cover plate remains securely attached without any visible elements.

The invention offers several advantages. Aesthetic integration is ensured because the cover plate is made of the same material as the wall and conceals the socket when it is not in use. Installation is simple thanks to the modular design and the use of a single screw, eliminating the need for visible screw connections. Ease of maintenance is guaranteed as the cover plate can be easily removed using a release element, such as an external magnetic tool or a release element with plugs, allowing access to the socket without disassembling the wall. Furthermore, the invention is widely applicable, suitable for use in natural stone, composite materials, ceramics and other stone-like materials, on both vertical and horizontal surfaces. The invention thus offers an innovative and functional solution for the integration of electrical sockets into high-quality interior finishes, optimizing both ease of installation and aesthetics.

In particular, due to its visual integration without visible fastening elements, the system is ideally suited for architectural applications requiring a seamless finish, such as in designer kitchens, hotels or high-quality bathroom interiors. The visible walls are substantially completely and seamlessly covered with stone or stone-like material, providing significant aesthetic added value.

In particular, the invention is suitable for use with stone or stone-like plates or tiles, including solid surface and/or solid core materials. Common brands in this field include HI-MACS and Corian.

In embodiments, the system according to the invention relates to a system for installing a socket into a stone or stone-like wall with a through-opening, comprising:
a. a built-in element, the built-in element comprising a plate with a front side and a rear side, and a passage, which passage extends from the front side to the rear side of the plate, the passage being dimensioned to accommodate a socket, and wherein the built-in element further comprises a receiving element, wherein the front side of the plate is adapted for attachment to the rear side of the stone or stone-like wall with the passage aligned with the through-opening in the wall, wherein the receiving element extends around the passage on the rear side;
b. a socket, suitable for detachable connection within the passage of the built-in element, the socket comprising a front side and a rear side, the rear side comprising contact points for electrically connecting electrical wiring to the socket, and the front side comprising a coupling suitable for receiving a plug, wherein the socket comprises a screw opening for receiving a screw and coupling the socket to the receiving element by means of the screw;
c. a cover plate dimensioned to cover the front side of the socket in the built-in element and to be recessed within the wall opening.

In embodiments, the socket relates to a type E socket. A type E socket, as is common in Belgium, France, Poland and several other countries, is characterized by a circular through-opening with two round contact buses for the phase and neutral pins of the plug, and a fixed earth pin sticking out at the center of the contact side of the socket housing. The corresponding plug (type E) has an opening into which the earth pin fits.

In embodiments, the socket relates to a type F socket. A type F socket, also known as the 'Schuko' system and widely used in Germany, the Netherlands, Spain and other European countries, also features a circular through-opening with two round contact buses, but the earth connection is achieved via two metal earth clips located on either side of the circular through-opening. The corresponding plug (type F) has metal contact surfaces on both sides that make contact with the earth clips when inserted.

In further embodiments, the system may be configurable for both type E and type F sockets, wherein the receiving element and the cover plate are designed to be compatible with both standards. This increases the applicability of the integrated system in different countries and makes it possible to support various socket standards using the same basic construction.

In some embodiments, the system has means for releasably connecting the components, in which the diameter of the cover plate is matched to the diameter of a through-opening, such that when inserting the cover plate into the through-opening, it is clamped within the through-opening.

In embodiments, the cover plate is provided with a ring-shaped clamping element behind the front side, wherein said clamping relates to the diameter of the ring-shaped clamping element being matched to the diameter of the through-opening.

In embodiments, the socket is a type F socket, which relates to providing a pair of respective metal earth clips on either side of the through-opening, and wherein the respective earth clips extend through corresponding recesses provided in the front side of the cover plate.

In embodiments, the cover plate comprises further recesses for side guides which are integrally formed with the system.

In embodiments, the means for releasably connecting comprise a first coupling element and a second coupling element, wherein the built-in element is provided with the first coupling element behind the stone or stone-like front side, and wherein the cover plate is provided with the second coupling element behind the front side. At least one of the first and second coupling elements is magnetic and both are magnetizable, wherein the first coupling element and the second coupling element are configured for magnetic coupling to one another.

In embodiments, the second ring-shaped coupling element also serves as a clamping element for clamping, wherein said clamping relates to a diameter of the ring-shaped clamping element being matched to the diameter of the through-opening.

In embodiments, the system further comprises a release element suitable for releasing the cover plate which is coupled to the built-in element, wherein said release element relates to the release of a clamping and/or the release of a magnetic coupling.

In embodiments, the release element relates at least to the release of a clamping by matching a diameter of the cover plate to a diameter of a through-hole, such that when inserting the cover plate into the through-opening, it is clamped within the through-opening. Thereby, the release element comprises respective plugs, preferably elastic plugs, which are shaped to engage in respective recesses belonging to the cover plate and associated with respective contact buses belonging to the socket. Said release is at least partly based on the clamping of the plugs.

In embodiments, said plugs are associated with door dampers.

In embodiments, the magnetic element relates to a plurality of magnets.

In embodiments, the plurality of magnets relates to two rows of diametrically arranged magnets, each row comprising at least two magnets.

In embodiments, the two rows of magnets are diametrically arranged around two centrally positioned plugs which are shaped to engage in respective recesses belonging to the cover plate and associated with respective contact buses.

In embodiments, the cover plate is provided at the rear side with a reinforcement for structural integrity of the cover plate. Such reinforcement is important because the function of the cover plate requires it to be thin, with a thickness not exceeding a few millimeters, for example between 1 mm and 5 mm or between 2 mm and 4 mm or between 2.5 mm and 3.5 mm, for example 1 mm or 1.2 mm or 1.4 mm or 1.6 mm or 1.8 mm or 2 mm or 2.2 mm or 2.4 mm or 2.6 mm or 2.8 mm or 3 mm or 3.2 mm or 3.4 mm or 3.6 mm or 3.8 mm or 4 mm or 4.2 mm or 4.4 mm or 4.6 mm or 4.8 mm or 5 mm. With such thicknesses, it is challenging to provide a cover plate of sufficient strength. Reinforcement on the rear side is therefore desirable and is particularly important in cases where the material of the cover plate has poor resistance to tensile forces, such as natural stone, and/or is fragile. This could, for example, be a thin reinforcement disc with openings only for conductors, or, preferably, a ring. The reinforcement can thereby be permanently attached to the rear side of the cover plate, for example by adhesive bonding. In this way, the reinforcement forms a single unit with the cover plate, whereby the structural integrity is protected not only when in use in the installed state, but also when not installed and during assembly.

In embodiments, said reinforcement comprises a ring-shaped reinforcement element having an outer perimeter that substantially matches the outer perimeter of the front side of the socket. Since the reinforcement element must in any case include openings for conductors, a ring is a convenient and simple geometry. This also offers the structural advantage that it can be recessed relative to other parts of the socket, and thus does not contribute to a further increase in the thickness of the cover plate, which is undesirable given the limited space available for the cover plate. Furthermore, a ring provides optimal structural protection of the areas where impact is expected (phase conductors), whilst also being located near sections of the through-opening, preventing breakage caused by forces at the point of contact with the through-opening. A further advantage of a ring shape is that it advantageously allows the reinforcing element to fulfil additional functions, such as a detachable coupling by magnetic connection and/or by clamping and/or by a single- or double-part snap-fit or clamp connection with a single- or double-part form-fit, as explained in this document.

In embodiments, the means for detachable connection relate to said ring-shaped reinforcement element.

In embodiments, the detachable connection relates to a diameter of the ring-shaped reinforcement element being matched to a diameter of a through-opening, such that when inserting the cover plate into the through-opening, it is clamped within the through-opening.

In embodiments, the detachable connection relates to connecting a first coupling element and said ring-shaped reinforcement element as a second coupling element, wherein the built-in element is provided with the first coupling element at the front side.

In embodiments, the ring-shaped reinforcement element is magnetizable and the first coupling element is magnetic, and the first coupling element and the second coupling element are configured for magnetic coupling to one another.

In embodiments, the first coupling element and the ring-shaped reinforcement element are adapted to snap together by means of a two-part form-fit, preferably by means of lugs, snap hooks or snap balls.

In embodiments, the detachable connection involves clamping by means of a single-point form-fit, via a protrusion on one of the ring-shaped reinforcement element and an inner wall of the through-opening, which makes contact with the other of the ring-shaped reinforcement element and the inner wall of the through-opening.

In embodiments of the method, the step of providing a through-opening in the wall comprises manufacturing an assembly of a wall and a cover plate whilst maintaining a structural connection between them, for example whilst maintaining a vein pattern. The step of providing the through-opening comprises the sub-steps of: partially cutting out, using a hole saw, the through-opening in a front side of the wall, wherein a cutting depth is such that a portion of the through-opening not yet cut at the level of the rear side of the wall essentially corresponds to a thickness of the cover plate in production; providing, in the cover plate in production, at least two recesses for the passage of phase pins of a plug; applying, to the rear side of the wall and at the level of the recesses, a mold comprising a contact surface with protrusions which are clamped into the recesses for the passage of phase pins for aligning the mold with the cover plate in production; applying one or more markings, comprising the applying, using a drill bit, a center marking in the cover plate, via a center opening present in the mold; removing the mold; and cutting the cover plate, using the hole saw centered on the center marking.

In embodiments, the mold further comprises a circular contour groove whose diameter corresponds to that of the cover plate to be manufactured, and the step of applying the one or more markings further comprises applying, using said hole saw, a contour marking in the mold, wherein alignment of the applied contour marking with the contour groove is a prerequisite for cutting out the cover plate.

In embodiments, the mold is adapted to be suitable for a type E socket comprising an earth pin, wherein the at least two protrusions further comprise a third protrusion for clamping into a recess in the cover plate for the passage of an earth pin.

In embodiments, the release element is adapted for a type E socket comprising an earth pin, wherein the release element comprises a recess for receiving said earth pin.

In embodiments, the release element is adapted for a type F socket comprising earth clips on either side of the through-opening, wherein the release element comprises two recesses on either side of an outer casing.

In embodiments, the release element comprises both a recess for receiving the earth pin of a type E socket and two recesses on either side of an outer casing, so as to be adapted to both a type E socket and a type F socket.

In a preferred embodiment of the invention, the first coupling element is magnetic. In a further preferred embodiment, the second coupling element is magnetizable, but it may equally well be magnetic for an even stronger coupling.

This means that the receiving element, located at the rear side of the wall, comprises a built-in magnetic component that holds the cover plate firmly in place. This configuration further simplifies the mechanical coupling, making installation and maintenance even more efficient. It also contributes to an even more seamless integration of the socket into the stone-like wall, without the need for additional fixing elements. This design allows the cover plate to be removed and repositioned with minimal effort, for example for inspection or replacement of the socket. The force is sufficient to hold the cover plate in place under normal conditions of use, whilst a targeted external force, such as a magnetic force or a force transmitted via plugs, can be used for removal. This mechanism maintains the stability of the installation whilst offering the flexibility of easy disassembly.

In a preferred embodiment of the invention, the first coupling element is ring-shaped and has an outer perimeter that substantially matches the outer perimeter of the front side of the socket. This configuration ensures that the magnetic coupling is evenly distributed around the cover plate, enabling a stable attachment. A ring-shaped magnetic element provides a robust hold whilst remaining easy to remove using an external magnetic extraction tool. As the forces are evenly distributed, the risk of incorrect positioning or tilting of the cover plate is reduced.

The ring-shaped structure can be configured in various widths and thicknesses depending on the application and the required magnetic force. In one variant, the ring-shaped structure may consist entirely of magnetic material, whereby it interacts directly with a corresponding metal or magnetizable ring on the rear side of the cover plate.

In an alternative variant, the ring-shaped structure may comprise a base of a non-magnetic material, such as plastic or a composite material, within which magnets are strategically placed to generate optimal pulling force. This allows for the creation of variants in which the magnetic force can be precisely adapted to the specific application.

Furthermore, the ring-shaped first coupling element can be integrated with additional locking mechanisms offering additional stability without compromising the visual aesthetics of the system. In certain applications, an asymmetrical ring shape can be used, whereby the magnetic field is controlled in such a way that the cover plate can only be correctly positioned in one specific orientation. This offers the advantage of ensuring a uniform appearance and prevents incorrect placement of the cover plate. Finally, various materials can be used for the cover plate, such as natural stone, ceramics or synthetic composites, whereby the magnetic properties can be adapted according to the type of wall and the desired strength of the coupling.

According to a further embodiment of the invention, the second coupling element is ring-shaped, with dimensions corresponding to those of the first coupling element. This configuration ensures that the magnetic coupling functions optimally because both elements fit together precisely. The ring-shaped design results in a uniform distribution of the magnetic forces, which not only ensures stable attachment of the cover plate but also allows for easy removal and repositioning.

In one variant, both the first and second coupling elements are fully magnetic, creating a strong direct coupling. In an alternative configuration, the second coupling element may have a non-magnetic base into which strategically placed magnets are integrated. This allows for flexible adjustment of the magnetic strength and enables the development of variants in which the pulling force on the cover plate can be optimized depending on the application.

An additional variant may consist of a second coupling element featuring directional anisotropic magnetization, whereby the magnetic field lines are directed in such a way that the cover plate can only attach in a specific orientation. This prevents incorrect installation and contributes to a uniform aesthetic of the socket within the wall. Furthermore, the ring-shaped configuration can be adjusted in width and thickness to suit various installation scenarios, for example in walls with varying thicknesses or different finish layers.

Furthermore, the second coupling element can be manufactured from different materials depending on the desired application. Whilst metals and magnetic alloys provide a robust coupling, composite materials and polymers with encapsulated magnets can offer a lighter and more flexible alternative. In addition, the cover plate can be designed in such way that it incorporates additional structural elements that interact with the second coupling element, such as locking elements or positioning mechanisms, which further improve the correct alignment of the cover plate. The choice of materials and configurations makes it possible to adapt the invention to different environments and usage requirements, without compromising the core functionality of the magnetic attachment system.

According to a further embodiment of the invention, the system comprises a release element suitable for disconnecting the cover plate which is coupled to the built-in element. This release element comprises a magnetic element with a shape corresponding to that of the second coupling element and, when brought into abutment with the cover plate, generates a greater magnetic field strength than the first coupling element. This allows the cover plate to be easily detached from the built-in element without the need for mechanical intervention. This system offers a practical solution for maintenance and replacement, without the need for tools or destructive removal of the cover plate.

In one variant, the release element may consist of a ring-shaped magnetic structure that exactly matches the shape and dimensions of the second coupling element on the cover plate. This ensures uniform magnetic interaction and a consistent decoupling force. In an alternative configuration, the release element may comprise a series of individual magnets strategically positioned to generate a targeted magnetic pulling force, thereby enabling controlled release. This approach can be particularly useful in applications where precise removal is required, for example with fragile or thin cover plates.

Another variant comprises a release element with adjustable magnetic strength, for example through the use of a rotating mechanism or adjustable magnetic intensity. This allows the user to adjust the magnetic force to suit the specific application and choice of material for the cover plate. Consequently, the invention can be widely used in various installation scenarios, where the release force can be optimally adjusted to the materials used and the desired degree of fastening.

Furthermore, the release element can be designed to be ergonomic and user-friendly, for example in the form of a handle or a special tool that can be easily positioned against the cover plate. This enhances functionality and makes the use of the release function intuitive and efficient. The design of the release element may also vary depending on the application, taking into account factors such as installation depth, accessibility and the desired degree of magnetic interaction between the elements.

According to a further embodiment of the invention, the magnetic element of the release element is substantially ring-shaped. This ring-shaped configuration ensures that the magnetic field strength is evenly distributed and enables efficient and controlled release . The ring shape offers the advantage that the magnetic attractive force remains consistent in all directions, allowing the cover plate to be removed in a predictable and controlled manner. Furthermore, this aligns optimally with ring-shaped second coupling elements.

In one variant, the ring-shaped structure of the magnetic element can be a closed and uniform ring, thereby achieving maximum pulling force without interruptions. An alternative configuration may consist of a partial ring shape, for example a segmented structure, in which specific parts of the ring are more magnetically active than others. This can be useful for applications where focused release is desired or where it is important that the cover plate only detaches in a specific direction.

An additional variant can provide a magnetic element of variable thickness, whereby the strength of the magnetic field is increased or decreased in specific zones. This can help to precisely adjust the strength of the release to the materials used and the environment in which the system is deployed. Another possible variant involves the integration of a flexible ring-shaped structure, whereby the magnet is placed in an elastic or resilient holder, allowing it to adapt slightly to variations in the thickness or shape of the cover plate.

Furthermore, the ring-shaped configuration may be combined with additional positioning elements, such as small ridges or grooves that ensure the cover plate remains correctly aligned at all times during magnetic coupling and decoupling. Depending on the application, the material of the ring-shaped element may vary, ranging from traditional ferrite magnets to neodymium magnets with increased field strength or composite materials with integrated magnetic particles. This makes the invention adjustable to various applications and installation conditions, whilst retaining the core functionality of the magnetic release mechanism.

In a preferred embodiment, the receiving element is at least 10 mm high relative to the rear side of the plate or tile. This provides the minimum size required to stably receive and anchor a socket. This can be achieved, for example, via lateral anchoring, but can equally be achieved via anchoring along the rear side. Preferably, this height is at least 20 mm, in order to provide sufficient space for anchoring.

Preferably, the receiving element is no more than 50 mm high relative to the plate or tile. More preferably, this is no more than 40 mm, 30 mm, 25 mm or less.

According to a further embodiment of the invention, the receiving element comprises one or more standing walls which extend around the passage from the rear side of the plate and at least partially enclose it. This design ensures improved stability of the socket within the built-in element, as the standing walls form a physical barrier against lateral movements. As a result, the socket remains firmly in place, even with repeated insertion and removal of a plug.

In one variant, the standing walls may form a closed cylindrical structure, completely surrounding the passage and providing uniform mechanical support. This not only increases structural integrity but also prevents the socket from accidentally shifting or tilting. An alternative configuration may provide for partial standing walls, for example in the form of segments strategically placed around the passage. This may be useful in applications where additional space is required for wiring or where a more flexible installation is desired.

An additional variant may consist of standing walls with a tapered profile, whereby the diameter gradually narrows towards the rear side. This may contribute to precise guidance and self-centering placement of the socket within the built-in element. Furthermore, the height of the standing walls may be varied depending on the thickness and strength of the wall material. For thicker walls, higher standing walls may be used for additional grip, whilst for thinner walls, lower walls can provide sufficient stability without unnecessary use of material.

Furthermore, the standing walls may be provided with internal reinforcing ribs or flexible clamping mechanisms that provide additional support without permanently fixing the socket in place. This makes it possible to easily remove and replace the socket when necessary, without compromising the integrity of the installation. The choice of material for the standing walls may also vary, from sturdy metals to plastic or composite materials, depending on the specific requirements of the application and the desired balance between strength and flexibility.

According to a further embodiment of the invention, the receiving element comprises one or more coupling structures extending inwards from the standing walls towards a central axis of the opening. The coupling structure and the socket are configured to rest against each other when coupled, whereby the screw for coupling the socket into the built-in element anchors into the coupling structure upon coupling. This design provides a robust fastening and ensures that the socket remains firmly in place, even with frequent use.

In one variant, the coupling structures may consist of a series of symmetrically positioned projections clamping the edge of the socket, thereby ensuring secure positioning without the need for additional fastening elements. An alternative configuration may use flexible coupling structures that deform slightly when inserting the socket and then lock into place when the screw is tightened. This allows for easy installation and removal without compromising structural stability.

An additional variant may provide coupling structures with an integrated locking mechanism, for example in the form of small spring clips or ridges that interact with corresponding recesses in the socket. This automatically secures the socket upon installation, providing additional assurance against loosening due to vibrations or repeated use. Another possibility is that the coupling structures taper towards the screw connection, so that as the screw is tightened, the socket gradually self-centers and a uniform pressure distribution is achieved.

Furthermore, the coupling structures can be designed with different heights and widths, depending on the dimensions and material composition of the wall and the socket. For applications in thin-walled structures, wider coupling structures can offer better weight distribution, whilst in thick-walled applications, narrower but deeper coupling structures allow for more effective anchoring. The material from which the coupling structures are made may also vary, ranging from metals to reinforced plastic composites, depending on the requirements of the specific application and the desired degree of flexibility and durability.

According to a further embodiment of the invention, the wall from which the coupling structure extends protrudes further from the plate than at least part of the rest of the wall. This design creates a recessed or raised attachment zone in which the coupling between the socket and the built-in element can take place optimally. This variation improves the stability of the attachment whilst simultaneously maintaining the structural integrity of the wall.

In one variant, the extended wall may be provided with additional reinforcing elements, such as ribs or reinforcing profiles, offering additional mechanical support and optimizing the distribution of forces. This is particularly useful for installations in thin or fragile stone-like materials, where additional support is required to prevent damage or breakage.

An alternative configuration may provide for a variable height of the extended wall, whereby the extension tapers gradually to allow for a more even distribution of pressure when securing the socket. This prevents point loading and helps to extend the service life of the system, particularly in applications where the socket is used frequently. An additional variant comprises an asymmetrical extension of the wall, with one side extending further than the other. This may, for example, be used to facilitate specific cable routing or integration with other components of an electrical installation.

Furthermore, the shape of the extended wall may be adapted to the specific requirements of the installation environment. For instance, a curved or tapered extension may be used to ensure the socket fits better within certain wall structures or to simplify installation in complex surfaces. In addition, the choice of material for the extended wall may vary from solid metal or reinforced plastic to a combination of both, depending on the strength and flexibility required for the intended application.

According to a further embodiment of the invention, the first coupling element is recessed at the front side of the plate around the passage and is radially separated from the passage by a recessed wall defining the internal perimeter of the passage. This design provides precise alignment and protection of the magnetic coupling mechanism, whilst allowing the cover plate to maintain seamless integration with the wall surface. The recess ensures that the magnetic field is used optimally, without the cover plate protruding or being able to shift unintentionally.

In one variant, the recessed wall may have a constant thickness, creating a uniform magnetic pull force and ensuring the cover plate remains stable in place. An alternative configuration may comprise a stepped recess, whereby different levels of recess are applied to optimize compatibility with cover plates of varying thicknesses. This makes the system more versatile and suitable for different installation environments.

An additional variant may provide a recessed wall with integrated mechanical locking elements, such as small ridges or ribs, which offer additional grip when positioning the cover plate. This allows the cover plate to be positioned more accurately without relying solely on magnetic forces. Another possibility is the use of a flexible or adjustable recessed wall, whereby the wall can move or deform slightly during installation, thereby accommodating tolerance differences in the stonework or the cover plate.

Furthermore, the recessed wall may be made from various materials, depending on the application. For applications requiring maximum strength, the wall may be made of a robust metal or composite, whilst lighter installations can use plastic or hybrid materials. The configuration of the mounting wall may also vary depending on the desired depth and strength of the attachment, allowing the system to be optimally adjusted to the specific requirements of the installation site.

According to a further embodiment of the invention, the recessed wall aligns substantially with the outer perimeter of the front side of the socket. This design ensures that the cover plate remains precisely positioned and does not shift when a plug is inserted or removed. The recess creates a seamless connection between the cover plate and the wall, thereby further optimizing the aesthetic integration and protecting the system against dust and moisture.

In one variant, the recessed wall may include a flexible edge that adapts to the contours of the cover plate. This ensures a better seal and prevents small gaps where dust and dirt can accumulate. An alternative configuration may include a recessed wall with a variable depth, allowing for compatibility with different thicknesses of cover plates without requiring modifications to the wall itself.

A further variant comprises a recessed wall with integrated sealing materials, such as rubber or silicone edges, providing enhanced protection against external influences such as moisture or temperature fluctuations. This may be particularly useful for applications in kitchens, bathrooms or outdoor settings where environmental factors play a role. Another option is the use of a profiled recessed wall with small grooves or ridges, providing additional grip for the cover plate and ensuring a more secure mechanical anchoring.

Furthermore, the recessed wall may be designed with a minimal thickness to limit the impact on the wall structure, or conversely with a thicker version to provide additional stability and robustness. The choice of material can range from metals and composites to high-performance polymers, depending on the requirements of the specific application. This design flexibility makes it possible to adapt the system to various installation scenarios, whilst maintaining core functionality and aesthetics.

A second aspect of the invention relates to a method for installing a socket in a stone or stone-like wall with a through-opening. The method comprises the steps of providing a through-opening in the wall, preferably in a stone or stone-like plate or tile, and securing a built-in element to the rear side of the wall. This built-in element comprises a plate having a front side, a rear side and a passage extending from the front side to the rear side of the plate. In addition, the built-in element comprises a receiving element configured to receive and connect the socket. The passage and the through-opening are substantially aligned, and the plate is preferably secured to the rear side of the wall by means of adhesive bonding.

After securing the built-in element, the socket is inserted through the through-opening and the passage and connected to the receiving element. This is achieved by means of a screw connection, thereby firmly anchoring the socket within the built-in element. A cover plate is then placed in the through-opening, against the front side of the socket, to cover the visible opening. This cover plate has a stone or stone-like front, so that it blends seamlessly into the surrounding wall.

In one variant, the built-in element may be secured to the wall using mechanical fastening elements rather than adhesive bonding, for example by means of screws or clamping mechanisms, depending on the installation environment and the type of wall material. An alternative configuration may comprise the use of a flexible built-in element that adapts to irregularities in the wall structure, thereby increasing compatibility with different materials and surfaces.

A further variant relates to the positioning of the socket within the built-in element. Instead of a fully central placement, the socket can be positioned slightly off-center, for example to integrate better with existing electrical installations or to create extra space for wiring. In addition, the cover plate may be provided with additional structural elements, such as a sealing rubber or a recessed profile, offering increased protection against moisture and dust, which is useful in environments such as kitchens and bathrooms.

Furthermore, the cover plate may be designed in such a way that it can be easily replaced or adapted, for example by means of a modular system allowing for the use of different finishing materials or colors. This makes the invention particularly versatile and suitable for a wide range of interior applications without compromising the core functionality of the magnetic attachment and the seamless integration of the socket into the wall.

According to a further embodiment, the cover plate comprises one or more openings that align with the buses and pins of the socket, such that passage is possible when inserting a socket.

According to a further embodiment of the invention, the method comprises a system according to one of the preceding embodiments, wherein the built-in element, the socket and the cover plate are used in combination to realize an integrated socket in a stone or stone-like wall. This method builds on the previously described steps of providing a through-opening in the wall, securing the built-in element to the rear side of the wall, positioning and connecting the socket within the built-in element, and arranging the cover plate.

In a further variant, the combination of components may be specifically configured for installations with varying wall thicknesses, whereby adapted attachment elements are provided to ensure the stability of the installation. This makes the system suitable for applications in both thin panels and massive walls without loss of structural integrity. An alternative variant may comprise the use of an adjustable cover plate, whereby different thicknesses or material types can be used depending on the desired aesthetic finish.

A further variant relates to the compatibility of the method with different types of socket modules. Instead of a standard electrical socket, the system may be configured to support other functional built-in elements, such as USB charging ports, network connections or wireless charging modules. This increases the versatility of the invention and makes it suitable for a wide range of applications within residential and commercial interiors.

Furthermore, the method may be adapted for applications requiring increased resistance to environmental influences. This can be achieved, for example, by using moisture- and dust-resistant seals within the built-in element or by applying a special treatment to the cover plate to increase resistance to temperature fluctuations and chemical influences. The method therefore offers not only an aesthetically and functionally integrated socket, but also a durable and low-maintenance solution for various areas of application.

In a third aspect, the invention relates to the use of a system according to one of the preceding embodiments for installing a socket into a stone or stone-like wall, wherein the socket is covered. This use involves the application of the integrated components in various environments and installation configurations, whereby the system is used to provide a seamless and aesthetically sound solution for sockets in solid or composite surfaces.

Various variants are possible within this application. In a first variant, the system is used in wall panels made of natural stone or composite materials in interior construction, where the magnetic coupling provides a visually unobtrusive and easy-to-maintain solution. An alternative configuration relates to the integration of the system into horizontal surfaces such as kitchen worktops, table tops or bathroom units, where ease of use is enhanced by the seamless integration and protection against dust and moisture.

A further variant may comprise the use of the system in outdoor environments, such as in weather-resistant installations or cladding, where the cover plate and the materials used may be adapted to withstand weather conditions and temperature fluctuations. In such applications, additional sealing mechanisms may be integrated to protect the socket from moisture and corrosion.

Furthermore, the system may be used in commercial and public spaces where a discrete and safe power supply is required. Applications in hotels, restaurants and workspaces can benefit from the modular nature of the system, whereby the cover plates can be adapted to different design preferences without affecting the functionality of the underlying electrical components. Due to the versatility of the construction, the system can be easily adapted to different installation scenarios and material requirements, whilst maintaining aesthetics and durability.

In embodiments, the aforementioned detachable connection relates to at least the clamping of the reinforcement to the built-in element.

In embodiments, the reinforcement comprises said ring-shaped reinforcement element as a central body, wherein the reinforcement further comprises a plurality of legs extending from the central body; and wherein said detachable connection relates to the extension of the respective legs through the built-in element in order to achieve said clamping.

In embodiments, the invention relates to a reinforcement; this reinforcement preferably forms an integral part of the cover plate. Preferably, the reinforcement is permanently connected to the cover plate during assembly by means of adhesive bonding.

In embodiments, the reinforcement is single-part, and comprises, for example, a ring-shaped reinforcement element. In other embodiments, the reinforcement is multi-part, and comprises, for example, the reinforcement element as a first part, and a plurality of respective legs as respective further parts.

In examples having a multi-part reinforcement configuration, the reinforcement comprises said reinforcement element as a central body, wherein the reinforcement further comprises a plurality of legs extending from the central body. In this context, the central body preferably extends along a central plane, and the legs preferably extend along the same side of the central plane and in the same leg direction, being a direction perpendicular to the central plane. In preferred embodiments, the central body relates to a ring-shaped body extending in a central plane along a front surface and a rear surface, and at least two of the respective legs, preferably all of the respective legs, extend from the rear surface along the same leg direction perpendicular to the central plane. In some embodiments, at least two of the respective legs, preferably all of the respective legs, are substantially equal in dimensions. In preferred embodiments, at least two of the respective legs, preferably all of the respective legs, extend between a respective proximal end provided on the central body and a respective distal end along the same leg direction. In exemplary embodiments, the respective proximal ends are thereby provided on a rear surface of the central body, being a ring-shaped body. In related preferred embodiments, all respective legs thereby extend from respective proximal ends which are evenly spread over a circular contour located on the rear surface of a central body which is essentially ring-shaped. In exemplary embodiments, this involves exactly two legs, and the even distribution relates to their being diametrically positioned on the rear surface of the ring-shaped central body.

In embodiments, the reinforcement consists entirely of the same magnetizable material, namely steel.

In embodiments, said clamping relates to means for clamping between the cover plate and the built-in element. In related embodiments, the built-in element comprises respective recesses comprising respective clamping means for clamping with the legs. In some embodiments, the clamping means relate to a chamfer, for example conical surfaces which taper wedge-shaped towards the front side of the built-in element. This chamfer (as an aspect of this conical finish) allows the cover plate to be inserted smoothly, whereby the legs are inserted into the recesses and gradually tightened against the chamfer. In preferred embodiments, the recesses extend over part of a ring-shaped contour and the chamfer relates to conical surfaces. Due to the advantageous shape of the recesses and the conical surface, the cover plate can thereby pivot through a certain angle, which may simplify positioning during assembly.

In embodiments, said ring-shaped reinforcement element is magnetizable, wherein said clamping relates to both said magnetic coupling and said clamping, and wherein the front side of the cover plate is made of stone or is stone-like.

In embodiments, a diameter of said cover plate comprising said reinforcement is no greater than 41 mm. This is illustrated in each of the figures; for a type F socket, the upper limit may relate to 41 mm, whilst for a type E socket, the upper limit may be 40 mm.

In a further aspect, the invention relates to a mold for manufacturing an assembly comprising a wall and a cover plate whilst maintaining a structural relationship between them, for example by maintaining a vein pattern, wherein the assembly relates to a system for installing a socket in the through-opening of the wall. The mold comprises a contact surface and a drilling surface, wherein the contact surface comprises at least two protrusions suitable for clamping into recesses for the passage of phase pins, and a center opening provided halfway between the two protrusions and extending through the mold to a drilling surface. The drilling surface comprises a contour groove extending circularly across the drilling surface around the center opening and, preferably, one or more radial grooves extending radially from the center opening. The mold is made of a material suitable for applying a center mark with a center punch at the center opening and a contour mark with a drill bit at the contour groove without damaging the drill bit or hole saw, preferably plastic.

According to further aspects of the invention, which are not intended to limit the scope of protection, the invention relates to the following Points 1-49.

Point 1. A system for installing a socket in a wall with a through-opening, comprising:
a built-in element, the built-in element comprising a plate with a front side and a rear side, and a passage, which passage extends from the front side to the rear side of the plate, the passage being dimensioned to accommodate a socket, and wherein the built-in element further comprises a receiving element, wherein the front side of the plate is adapted for attachment to the rear side of the stone or stone-like wall with the passage aligned with the through-opening in the wall, wherein the receiving element extends around the passage at the rear side;
a socket, suitable for detachable connection within the passage of the built-in element, the socket comprising a front side and a rear side, the rear side comprising contact points for electrically connecting electrical wiring to the socket, and the front side comprising a coupling suitable for receiving a plug, wherein the socket comprises a screw opening for receiving a screw and coupling the socket to the receiving element via the screw;
a cover plate dimensioned to cover the front side of the socket in the built-in element and to be recessed within the wall opening;
wherein the receiving element is adapted to detachably receive the socket and to connect the socket to the receiving element, preferably by means of a screw;
characterized in that the cover plate comprises a front side, and that the built-in element and the cover plate are provided with means for detachably connecting to one another.

Point 2. The system according to Point 1, wherein the cover plate is provided on a rear side with reinforcement for structural integrity of the cover plate.

Point 3. The system according to Point 2, wherein said reinforcement comprises a reinforcing element which is ring-shaped and has an outer perimeter which substantially matches the outer perimeter of the front side of the socket.

Point 4. The system according to Point 3, wherein said means for detachable connection relate to said ring-shaped reinforcing element.

Point 5. The system according to Point 4, wherein said detachable connection relates to the diameter of the ring-shaped reinforcement element being matched to the diameter of a through-opening such that, upon insertion of the cover plate into the through-opening, it is clamped within the through-opening.

Point 6. The system according to Point 5, wherein said detachable connection relates to the connection of a first coupling element and said ring-shaped reinforcement element as a second coupling element, wherein the built-in element is provided with the first coupling element at the front side.

Point 7. The system according to Point 6, wherein the ring-shaped reinforcement element is magnetizable and the first coupling element is magnetic, and wherein the first coupling element and the second coupling element are configured for magnetic coupling to one another.

Point 8. The system according to Point 6, wherein the first coupling element and the ring-shaped reinforcement element are adapted to snap together by means of a two-part form-fit, preferably by means of ridges or snap hooks or snap balls.

Point 9. The system according to Point 4, wherein the detachable connection relates to clamping by means of a single-part form-fit via a protrusion on one of the ring-shaped reinforcement elements and an inner lining of the through-opening which makes contact with the other of the ring-shaped reinforcement elements and the inner lining of the through-opening.

Point 10. The system according to Points 1-9, characterized in that the material of the wall and the material of the front side of the cover plate are visually similar.

Point 11. The system according to Point 10, characterized in that the material of the wall and the material of the front side of the cover plate are the same.

Point 12. The system according to any one of the preceding Points 1 to 11, characterized in that the wall and/or the front side of the cover plate are made of stone or a stone-like material.

Point 13. The system according to Point 12, characterized in that the wall and the front side of the cover plate are made of the same stone or the same stone-like material.

Point 14. The system according to any of the preceding Points 1 to 13, characterized in that the socket is a type E socket.

Point 15. The system according to any of the preceding Points 1 to 14, characterized in that the socket is a type F socket.

Point 16. The system according to any one of the preceding Points 1 to 15, characterized in that the means for detachable connection are at least related to the diameter of the cover plate being matched to a diameter of a through-opening such that, upon insertion of the cover plate into the through-opening, it is clamped within the through-opening.

Point 17. The system according to Point 16, characterized in that the cover plate is provided with a ring-shaped clamping element behind the front side, wherein said clamping relates to the diameter of the ring-shaped clamping element being matched to the diameter of the through-hole.

Point 18. The system according to Point 17, characterized in that the socket is a type F socket, which involves the provision of a pair of respective metal earthing clips on either side of the through-opening, and wherein the respective earthing clips extend through respective recesses provided in the front side of the cover plate.

Point 19. The system according to Point 18, wherein said cover plate comprises further recesses for side guides which are integrally formed with the system.

Point 20. The system according to any one of the preceding Points 1 to 19, characterized in that the means for detachably connecting comprise a first coupling element and a second coupling element, wherein the built-in element is provided with the first coupling element on the front side, and the cover plate is provided with the second coupling element behind the front side, wherein at least one of the first and second coupling elements is magnetic, and wherein both the first and second coupling elements are magnetizable, and wherein the first coupling element and the second coupling element are configured for magnetic coupling to one another.

Point 21. The system according to Point 20, characterized in that the first coupling element is magnetic.

Point 22. The system according to one of the preceding Points 20 or 21, characterized in that the first coupling element is ring-shaped and has an outer perimeter which substantially matches the outer perimeter of the front side of the socket.

Point 23. The system according to Point 22, characterized in that the second coupling element is ring-shaped, with dimensions corresponding to those of the first coupling element.

Point 24. The system according to Point 23, characterized in that the second ring-shaped coupling element also serves as a clamping element for clamping, wherein said clamping relates to the diameter of the ring-shaped clamping element being matched to the diameter of the through-opening.

Point 25. The system according to any of the preceding Points 22 to 24, wherein the ring shape has a maximum width of 5 mm, preferably 3 mm, and a minimum width of 1 mm, preferably 2 mm.

Point 26. The system according to any one of the preceding Points 1 to 25, characterized in that the system further comprises a release element suitable for releasing the cover plate which is coupled to the built-in element, wherein said release element relates to the release of a clamping and/or the release of a magnetic coupling.

Point 27. The system according to Point 26, wherein said release element relates at least to the release of a clamping by the diameter of the cover plate being matched to the diameter of a through-opening such that, upon insertion of the cover plate into the through-opening, it is clamped within the through-opening, and wherein said release element comprises respective plugs, preferably elastic plugs, which are shaped to engage in respective recesses belonging to the cover plate and associated with respective contact buses belonging to the socket, wherein said release is at least partly based on the clamping of the plugs.

Point 28. The system according to Point 27, wherein said plugs are related with door dampers.

Point 29. The system according to any one of the preceding Points 20 to 28, wherein the release element comprises a magnetic element having a shape corresponding to that of the second coupling element, wherein, in the engaged position of the release element relative to the cover plate, the magnetic element provides a greater magnetic field strength at the second coupling element than the first coupling element provides at the second coupling element during magnetic coupling of the first coupling element and the second coupling element.

Point 30. The system according to Point 29, wherein the magnetic element of the release element is substantially ring-shaped.

Point 31. The system according to Point 30, wherein the magnetic element comprises a plurality of magnets.

Point 32. The system according to Point 31, wherein the plurality of magnets comprises two rows of diametrically arranged magnets, each row comprising at least two magnets.

Point 33. The system according to Point 32, wherein the two rows of magnets are diametrically arranged around two centrally positioned plugs which are shaped to fit into respective recesses belonging to the cover plate and are associated with respective contact buses.

Point 34. The system according to any one of the preceding Points 1 to 33, characterized in that the receiving element comprises one or more standing walls which extend around the passage from the rear side of the plate and at least partially enclose it.

Point 35. The system according to Point 24, characterized in that the receiving element comprises one or more coupling structures which extend inwards from the walls towards a central axis of the opening, and wherein the coupling structure and the socket are configured to rest against one another upon coupling of the socket into the built-in element, and wherein the screw for coupling the socket into the built-in element anchors into the coupling structure upon coupling.

Point 36. The system according to Point 35, characterized in that the wall from which the coupling structure extends, further extends from the plate than at least a portion of the remainder of the wall.

Point 37. The system according to any one of the preceding Points 1 to 36, characterized in that the first coupling element is recessed at the front side of the plate around the passage, and is radially separated from the passage by a recessed wall which defines the internal perimeter of the passage.

Point 38. The system according to Point 37, characterized in that the recessed wall substantially adjoins the external perimeter of the front side of the socket.

Point 39. A method for installing a socket in a wall with a through-opening, comprising the following steps:
providing a through-opening in a wall, preferably a stone or stone-like plate or tile;
attaching a built-in element to the rear side of the wall, wherein the built-in element comprises a plate having a front side, a rear side and a passage extending from the front side to the rear side of the plate, wherein the built-in element further comprises a receiving element, wherein the passage and the through-opening are substantially aligned, and wherein the plate is secured to the rear side of the wall, preferably by adhesive bonding;
inserting a socket through the through-opening and through the passage and connecting said socket to the receiving element;
placing a cover plate in the through-opening against the front side of the socket to cover the front side of the socket;
characterized in that the cover plate comprises a front side, and that the recessed element and the cover plate are provided with means for detachable connection to one another,
the method further comprising a step of securing the cover plate to the built-in element by means of the means for detachable connection.

Point 40. The method according to Point 39, characterized in that the built-in element, socket and cover plate constitute a system according to one of the preceding Points 1 to 30.

Point 41. The method according to Points 39 or 40, wherein the step of providing a through-opening in the wall comprises the manufacturing of an assembly of a wall and a cover plate whilst maintaining a structural connection between them, e.g. whilst maintaining a vein pattern, the step comprising the sub-steps of:
- partially cutting out, using a hole saw, the through-opening in a front side of the wall, wherein a cutting depth is such that a portion of the through-opening not yet cut at the level of the rear side of the wall essentially corresponds to a thickness of the cover plate in production;
- providing, in the cover plate in production, at least two recesses for the passage of phase pins of a plug;
- applying, to the rear side of the wall and at the level of the recesses, a mold comprising a contact surface with protrusions which are clamped into the recesses for the passage of phase pins for aligning the mold with the cover plate in production;
- applying one or more markings, comprising:
   - the applying, using a drill bit, a center marking in the cover plate, via a center opening which is present in the mold;
- removing the mold;
- cutting the cover plate, using the hole saw centered on the center marking.

Point 42. The method according to Point 41, wherein the mold further comprises a circular contour groove whose diameter corresponds to that of the cover plate to be manufactured, and wherein the step of applying the one or more markings further comprises:
- applying, using said hole saw, a contour mark in the mold;
wherein alignment of the applied contour mark with the contour groove is a prerequisite for cutting out the cover plate.

Point 43. A mold for manufacturing an assembly comprising a wall and a cover plate whilst maintaining a structural connection between them, e.g. whilst maintaining a vein pattern, preferably according to Point 42, wherein the assembly relates to a system for installing a socket in the wall opening, said mold comprising a contact surface and a drilling surface, said contact surface comprising:
- at least two protrusions suitable for clamping into recesses for the passage of phase pins;
- a central opening provided halfway between the two protrusions and extending through the mold to a drilling surface;

said drilling surface comprising:
   - a contour groove extending circularly across the drilling surface around the center opening; and
   - preferably, one or more radial grooves extending radially from the center opening
wherein said mold is made of a material suitable for applying a center mark with a drill bit at the center opening and a contour mark with a hole saw at the contour groove without damaging the drill bit or hole saw, preferably plastic.

Point 44. The mold according to Point 43, wherein the mold is adapted to be suitable for a type E socket comprising an earth pin, wherein said at least two protrusions further comprise a third protrusion for clamping into a recess in the cover plate for the passage of an earth pin.

Point 45. A use of a system according to any of the preceding Points 1 to 38 for installing a socket into a wall, wherein the socket is covered.

Point 46. A release element suitable for use in a system according to one of the preceding Points 26 to 38, wherein said release element comprises at least plugs.

Point 47. The release element according to Point 46, wherein said release element is adapted for a type E socket comprising an earth pin, wherein said release element comprises a recess for receiving said earth pin.

Point 48. The release element according to Point 46, wherein said release element is adapted for a Type F socket comprising earthing clips on either side of the through-opening, wherein said release element comprises two recesses on either side of an outer casing.

Point 49. The release element according to Points 47 and 48, wherein said release element comprises both a recess for receiving an earth pin of a Type E socket and two recesses on either side of an outer casing in order to be adapted for both a Type E socket and a Type F socket.

In what follows, the invention will be described by means of non-limiting examples which illustrate the invention, and which are not intended or should not be interpreted as limiting the scope of the invention.

### EXAMPLES

### EXAMPLE 1:

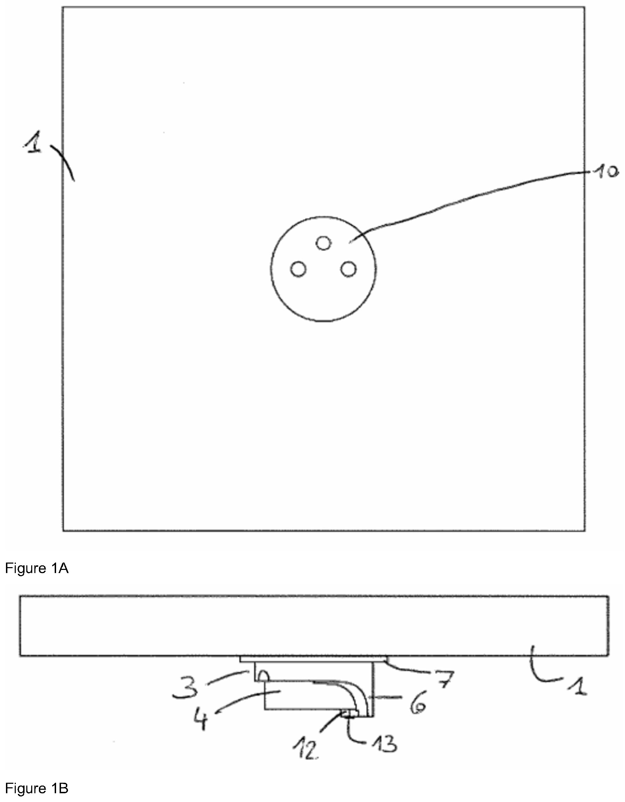

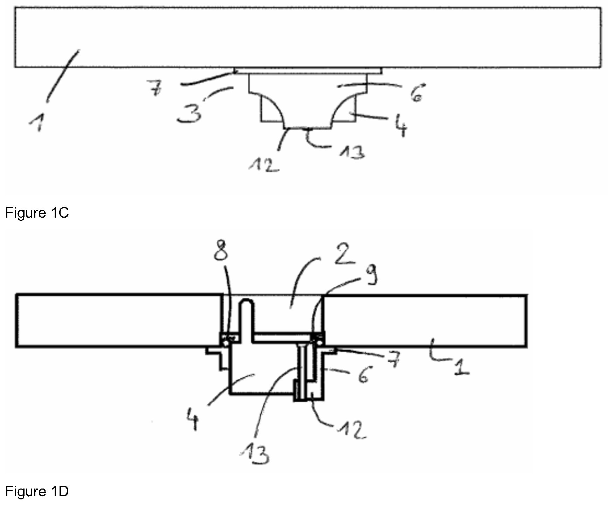

Figures 1A-B-C-D show multiple views (1A-B-C) and a cross-section (1D) of a system according to the invention with a socket therein.

The plate or tile (1) comprises a through-opening (2) with a diameter of 40 mm, corresponding to the standard diameter of a socket (4), with the built-in element (3) positioned thereon at the rear side of the plate or tile (1). The built-in element (3) comprises a receiving element (5) located behind the plate or tile, with standing walls (6) extending away from the plate or tile (1), and further comprises a flange (7) extending behind the plate or tile, formed as a plate. This flange (7) serves to anchor the built-in element (3) to the plate or tile, which is possible by means of adhesive bonding and/or screws (and any other fastening elements).

The built-in element (3) itself comprises a passage (11) which aligns with the through-opening (2) in the plate or tile (1), and leads to the rear side of the plate or tile (1), in a zone between the walls (6).

The socket (4) is dimensioned to fit into the through-opening (2) and to be slid through the passage (11), up to a rear coupling structure (12) which extends inwards from the standing walls (6). This coupling structure (12) serves as a boundary for the socket (4) and for anchoring it, for example with a screw. The coupling structure (12) is situated on a locally extended wall (6), whilst the rest of the wall (6) is shorter.

In some embodiments, the built-in element (4) may also extend partially through the opening with a cylindrical wall (9) that abuts the walls of the through-opening (2), typically over a very small height. This wall (9) also contains a first magnetic coupling element (8). This may extend over the entire perimeter, in the form of a ring, or at one, two, three, four, five or more positions, with discrete magnetic segments, for example.

To this first magnetic coupling element (8), a cover plate (10) may be coupled, which itself comprises a second magnetic or magnetizable coupling element (13), suitable for coupling to the first coupling element (8). This can, for example, be achieved by a similar configuration between the two coupling elements (8, 13), but this is not necessarily the case. However, the radial position is the same between the two, so that the 'rings' are aligned with one another.

This configuration allows the system to be installed very easily. A plate or tile (1) is prepared in advance by providing a through-opening (2) and attaching the built-in element (3) to the rear side (preferably by adhesive bonding of the flange (7) to the plate or tile (1)). Once this has been done, electrical wiring can be fed through the through-opening (2) from the wall, and the plate or tile (1) can be installed. The socket (4) can be installed through the through-opening (2) and into the passage (11) of the built-in element (3), so that the socket (4) comes to rest against the coupling structure (12) of the receiving element (5). The socket (4) can then be anchored to the coupling structure (12) , by inserting a screw (14) through the socket passing through the coupling structure (12) to connect the two.

Figures 2A-B-C-D show multiple perspectives of the system at various stages of installation.

Figure 2A shows a rear view of a plate or tile (1), to which a built-in element (3) is attached. The built-in element (3) comprises a flange (7) by which it abuts against the plate or tile (1), and standing walls (6). From these walls (6), a coupling structure (12) extends towards the central axis of the built-in element (3), to which a socket (4) is secured by means of a screw (13).

Figure 2B shows a front view of the built-in element (3) with a socket (4) installed and anchored by means of a screw (13). The built-in element is fitted with a magnet (8) which serves as a first coupling element around the contour of the top of the socket (4). Typically, this magnet (8) is positioned slightly raised relative to the flange (7), on a standing wall (9).

Figure 2C shows the system of Figure 2B, where a cover plate (10) is attached to the built-in element (3). The cover plate (10) comprises a second coupling element on the rear side, in the form of a magnet or magnetizable element that aligns with the first coupling element (8) and thereby couples with it. This may be achieved through a fully corresponding shape, or a partial correspondence.

The cover plate (10) corresponds in dimensions to the through-opening (2), and to openings that align with the electrical contact points, to allow coupling between the socket and the plug.

Finally, Figure 2D shows a plate or tile (1) with the built-in element (3), cover plate (10) and socket (4) integrated into it.

### EXAMPLE 2:

Figures 3A-30B show multiple views of either the system or a component thereof.

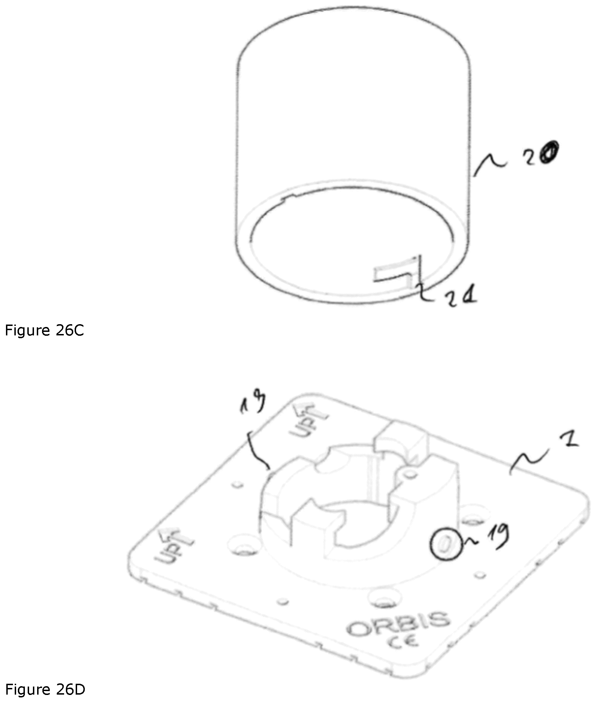

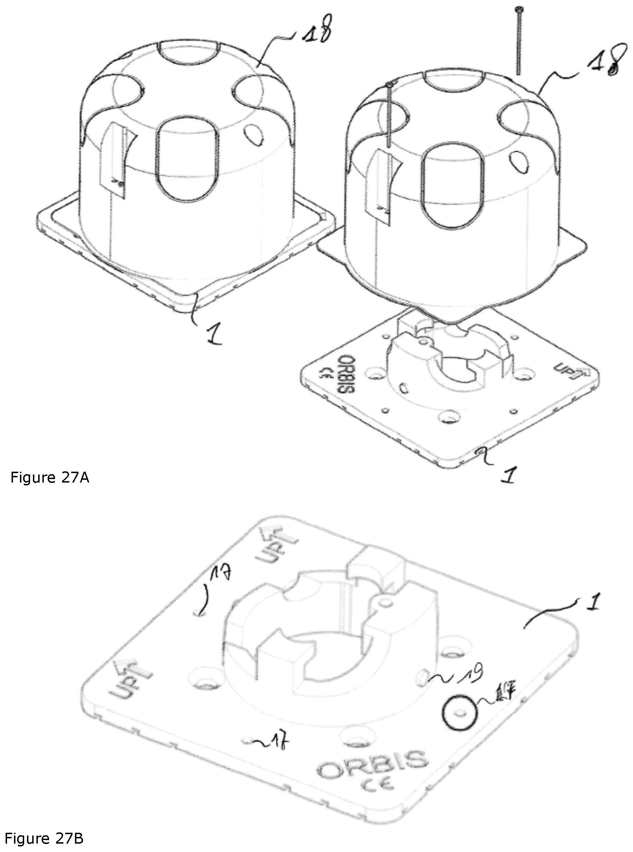

Figs. 3-4 show an exemplary embodiment of a type E socket with dimensions of 20 mm. This exemplary embodiment offers various advantages:
- **Improved anchoring:**
   ∘ Grooves 15 provided on the adhesive side for better adhesion to the stone.
   ∘ Four conical holes 16 (large through-openings, close to the 40 mm edge) provide additional anchoring should the adhesive bonding fail. The conical connection creates conical funnels towards the outside, in which adhesive particles are clamped. Additionally, or alternatively, the conical holes can be used for a screw connection.
- **Mounting options:**
   ∘ Four small non-through bore holes 17 on the rear side to secure both plasterboard mounting boxes and wall boxes 18, see Figure 27A.
   ∘ Screws from the plasterboard box are fitted upside down and secure themselves to this holder.
- **Cover cap:**
   ∘ Two small protrusions 19 are provided on the 40 mm outer edge, see for example Figure 26D.
   ∘ These allow the attachment of a smaller cover cap 20 manufactured by us, see for example Figure 26C. To this end, the cap 20 comprises a groove 21, through which it can be tightened using a groove system, in which the protrusion 19 is received.

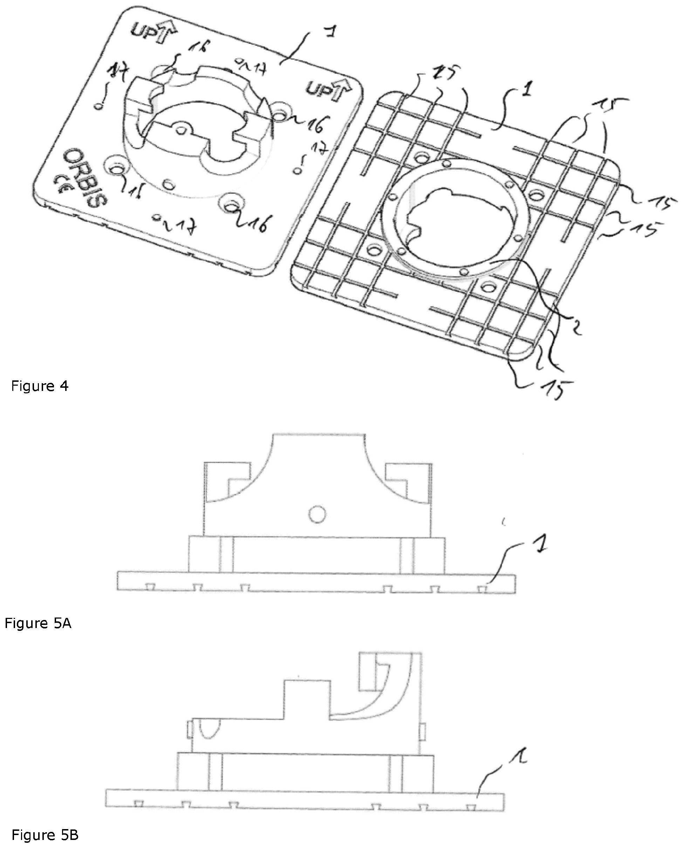

Fig. 3 shows an example of a system according to the invention. Thereby, Fig. 3A, Fig. 3B and Fig. 3C show various views. Fig. 4 shows an example of a system according to the invention.

Figs. 5-6 relate to an exemplary embodiment of a type E socket with dimensions of 12 mm instead of 20 mm. This exemplary embodiment offers the same innovations as the 20 mm variant (grooves, conical holes, boreholes, cover cap).
- **Specific difference:**
   ∘ The socket is positioned deeper, so that it **remains 15 mm below the stone surface.**
   ∘ Purpose: the earth pin does not protrude above the surface of the stone.
   ∘ The stone is 12 mm thick and the socket itself is 15 mm deep. The difference between these 15 mm and 12 mm is accommodated by the cover plate, for example a 3 mm stone disc. As a result, the PVC of the socket is not visible.

Fig. 5 shows an example of a system according to the invention. Thereby, Fig. 5A, Fig. 5B and Fig. 5C show various views.

Fig. 6 shows an example of a system according to the invention.

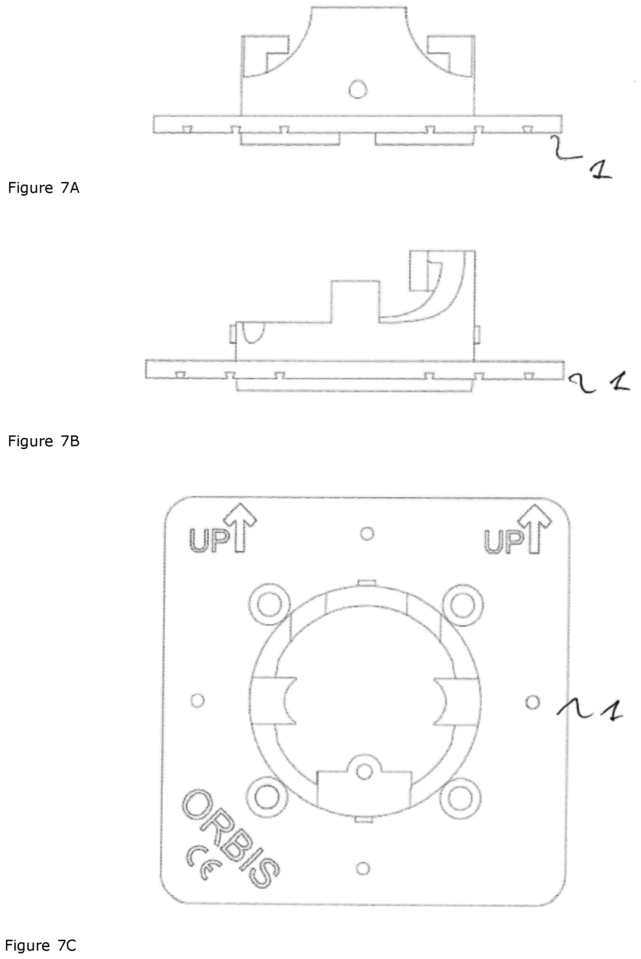

Figs. 7-8 show an exemplary embodiment of a type F socket with dimensions of 20 mm.
- Same basic principles as for type E in Figs. 3-4.
- **Important difference:**
   ∘ Edge earthing at the top and bottom → recess required in the cover plate and coupling element.
- Variants in diameter:
   o Ø41 mm (easier to manufacture due to clearance, may be used without recesses for earthing clips). This relates to a cover plate with a diameter not exceeding 41 mm.
   ∘ Ø40 mm (preferably with recesses for earthing clips). This relates to a cover plate with a diameter not exceeding 40 mm.
- See also other figures: the side view clearly shows how the edge earth connection fits into the socket.

Fig. 7 shows an example of a system according to the invention. Thereby, Fig. 7A, Fig. 7B and Fig. 7C show various views.

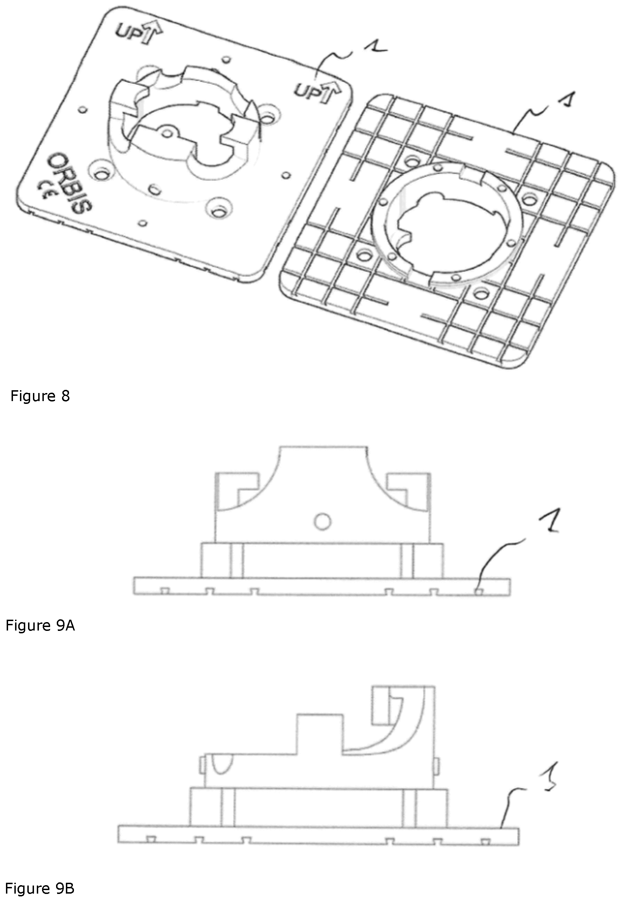

Fig. 8 shows an example of a system according to the invention.

Figs. 9-10 relate to an exemplary embodiment of a type F socket with dimensions of 12 mm.
- Same innovations as the 12 mm type E shown in Figs. 5-6.
- **Additional detail:**
   o Recess above and below the small U-profile, cut out from both the holder and the mounting plate.
- An overview of assembly and variations can be found in the subsequent figures.

Fig. 9 shows an example of a system according to the invention. Thereby, Fig. 9A, Fig. 9B and Fig. 9C show various views.

Fig. 10 shows an example of a system according to the invention. Figures 9A-C and Figure 10 relate to type F associated with side guides, wherein the side guides are either absent or provided as protrusions on the inner contour of the through-opening in the wall or as separate components.

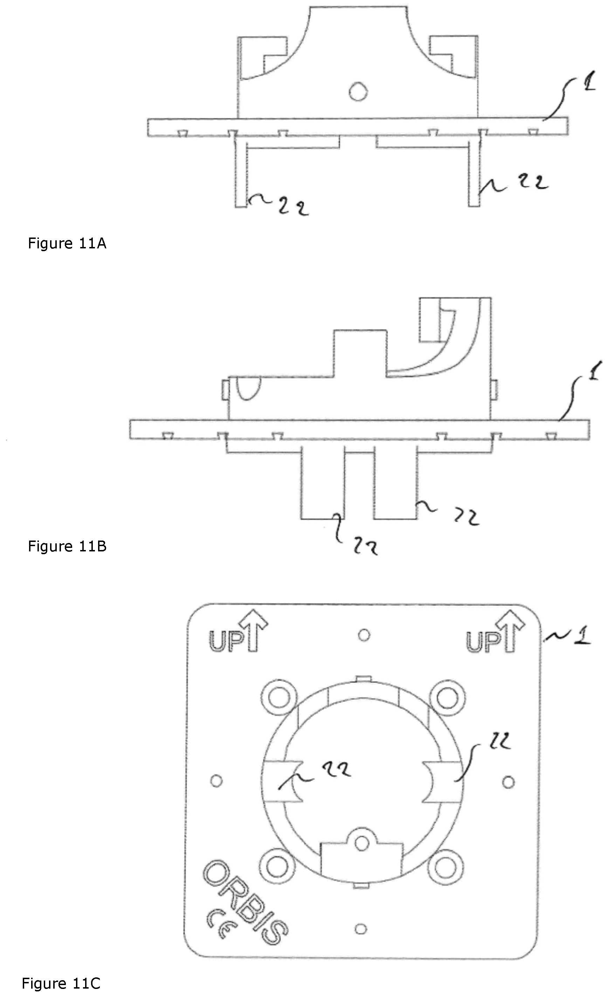

Figs. 11-12 show an exemplary embodiment of a type F socket with a diameter of 20 mm and a side guide 22.

Fig. 11 shows an example of a system according to the invention. Thereby, Fig. 11A, Fig. 11B and Fig. 11C show various views.

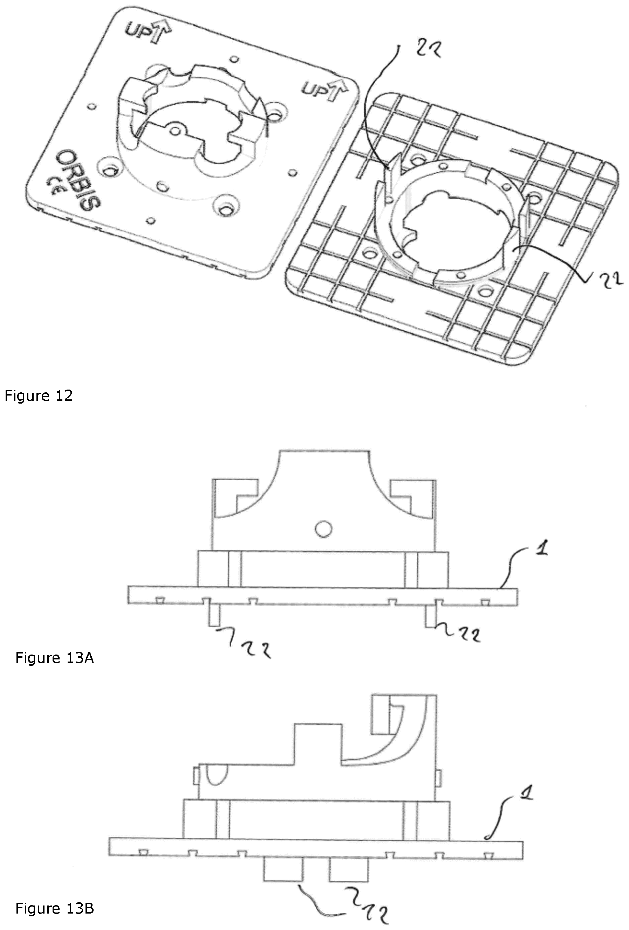

Fig. 12 shows an example of a system according to the invention. Figures 11A-C and Figure 12 relate to a type F socket associated with side guides, wherein the side guides are provided as integrally formed with plate 1, wherein the cover plate has complementary recesses to accommodate them.

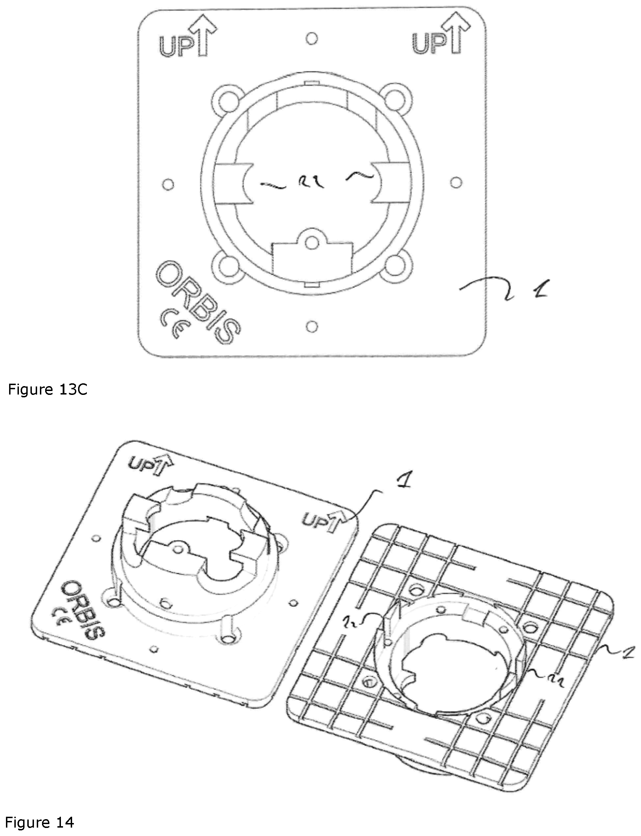

Figs. 13-14 relate to an exemplary embodiment of a type F socket with dimensions of 12 mm and side guide 22.

Fig. 13 shows an example of a system according to the invention. Thereby, Fig. 13A, Fig. 13B and Fig. 13C show various views.

Fig. 14 shows an example of a system according to the invention.

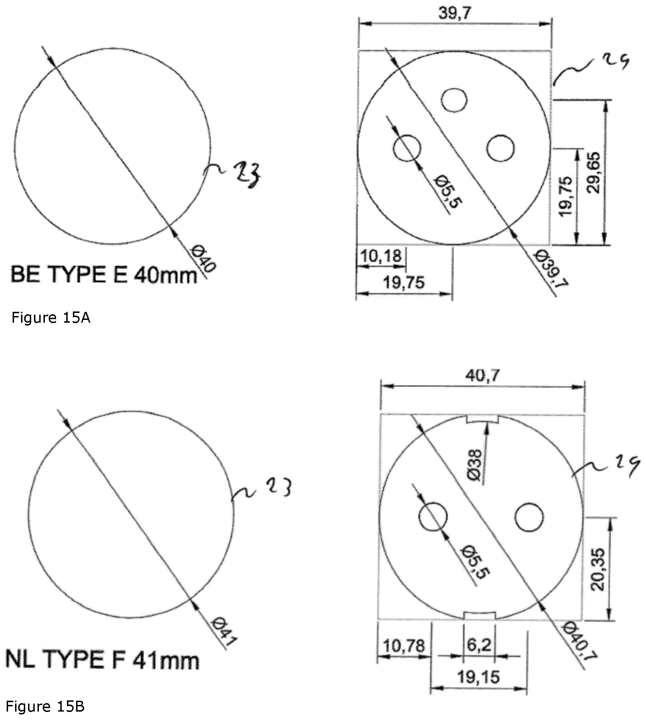

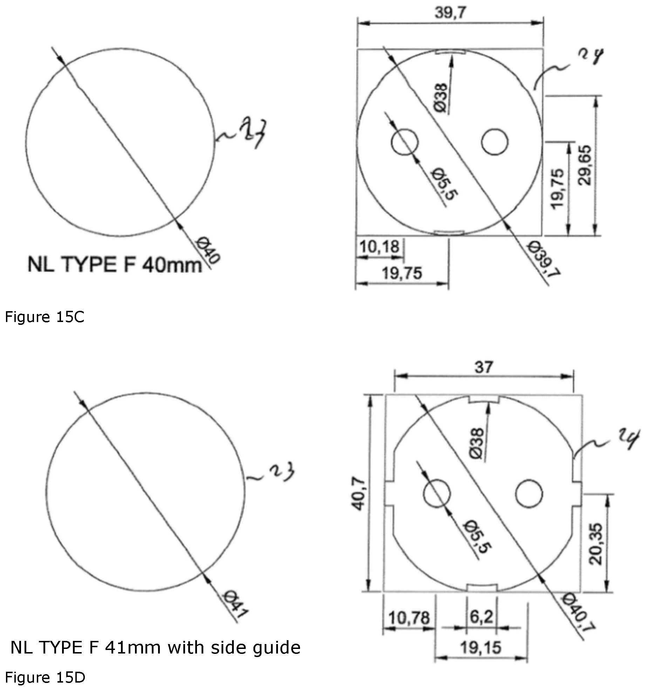

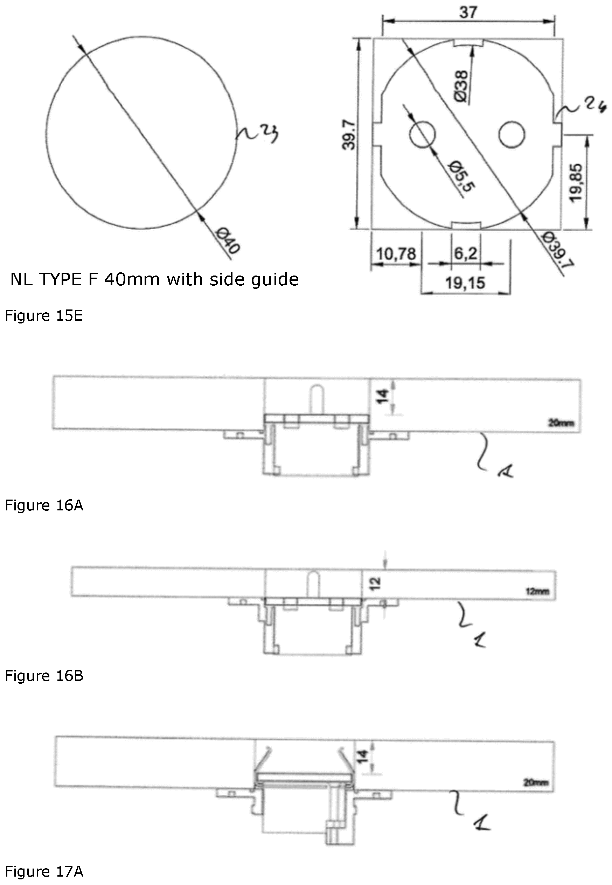

Fig. 15 shows example dimensions for various types, each with the hole in stone 23 and the center plate in stone 24. Thereby, Fig. 15A, Fig. 15B, Fig. 15C, Fig. 15D and Fig. 15E show various views.

Fig. 16 illustrates exemplary depths for type E. Thereby, Fig. 16A shows depth 14 for type E 20 mm and Fig. 16B shows depth 12 for type E 12 mm.

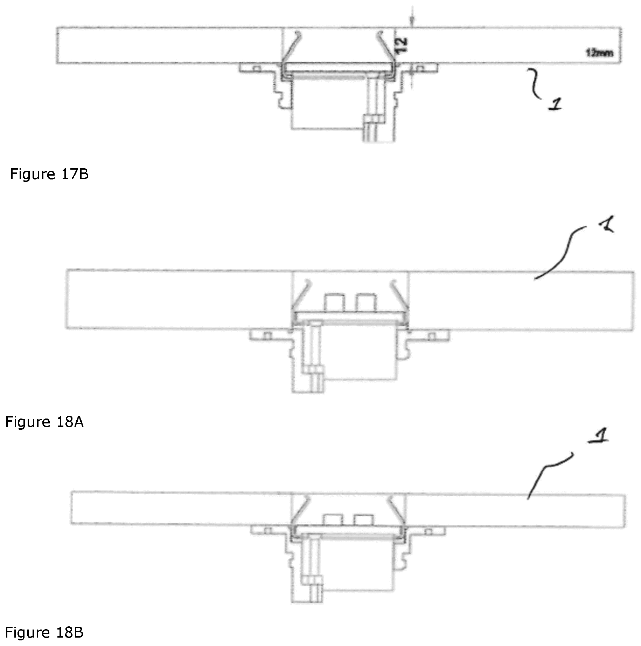

Fig. 17 illustrates exemplary depths for type F. Thereby, Fig. 17A shows depth 14 for type F 20 mm and Fig. 17B shows depth 12 for type F 12 mm.

Fig. 18 illustrates a side view of type F with side guide. Thereby, Fig. 18A shows type F 20 mm and Fig. 18B shows type F 12 mm.

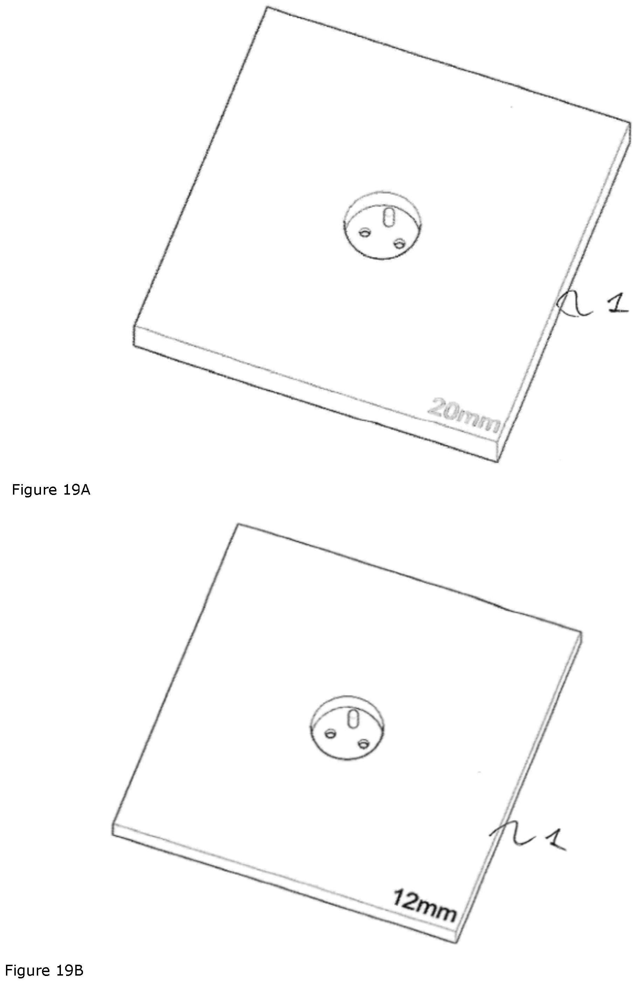

Fig. 19 illustrates an exemplary embodiment for type E 20 mm, in Fig. 19A, and type E 12 mm, in Fig. 19B.

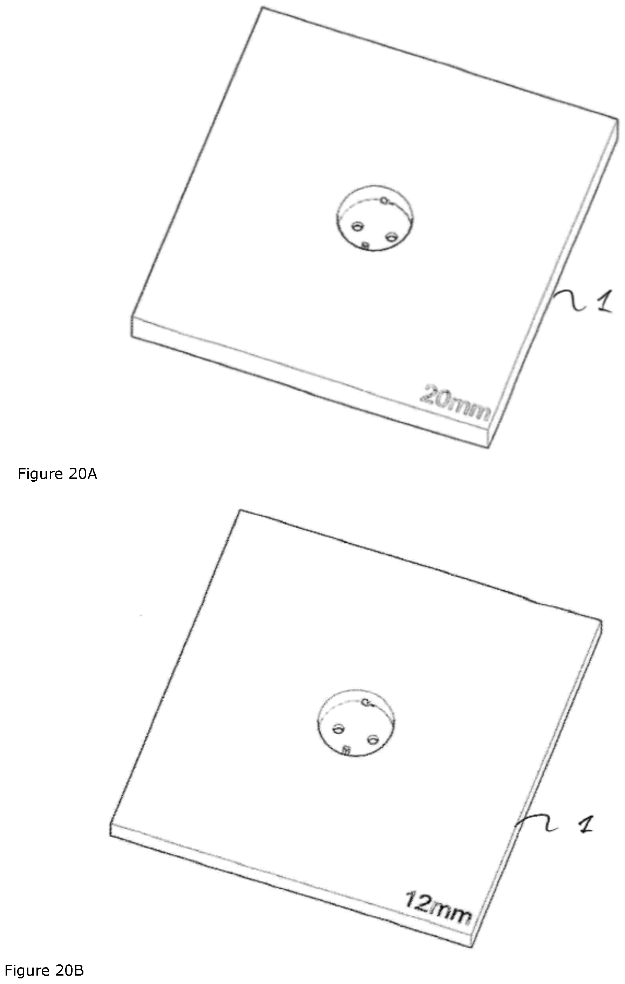

Fig. 20 illustrates an exemplary embodiment for type F 20 mm, in Fig. 20A, and type F 12 mm, in Fig. 20B.

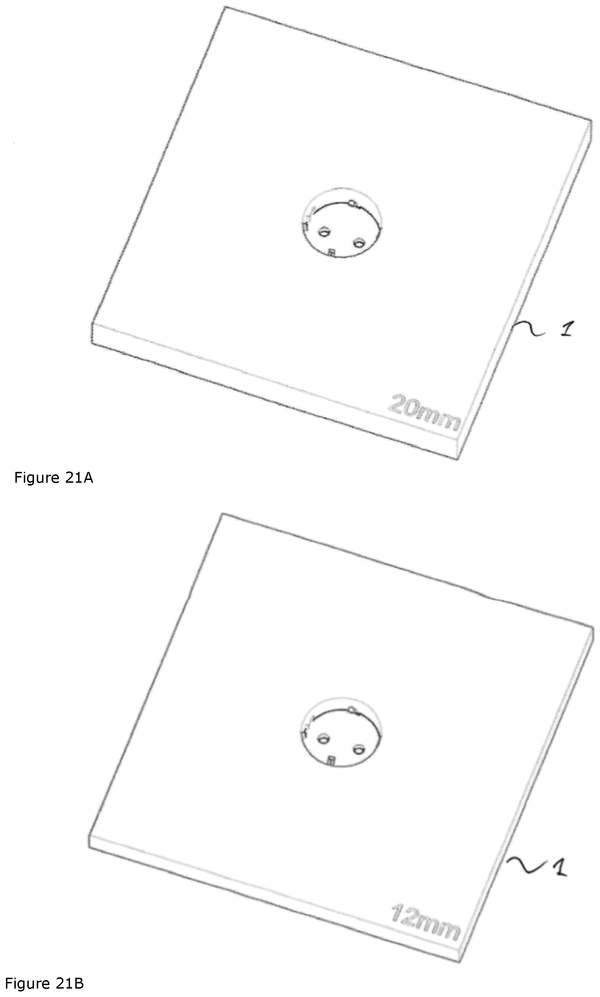

Fig. 21 illustrates an exemplary embodiment for type F 20 mm with side guide, in Fig. 21A, and type F 12 mm with side guide, in Fig. 21B.

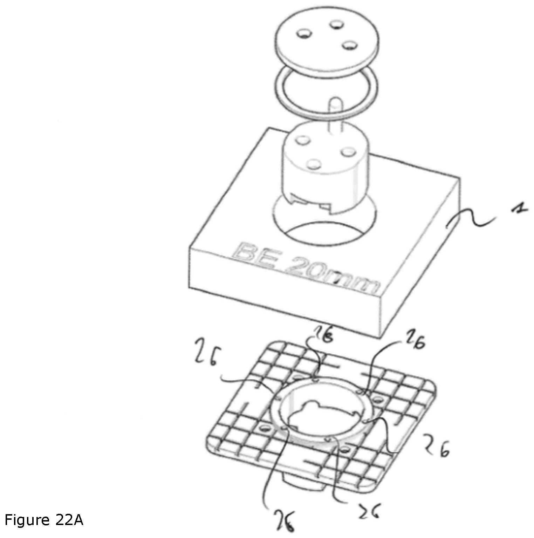

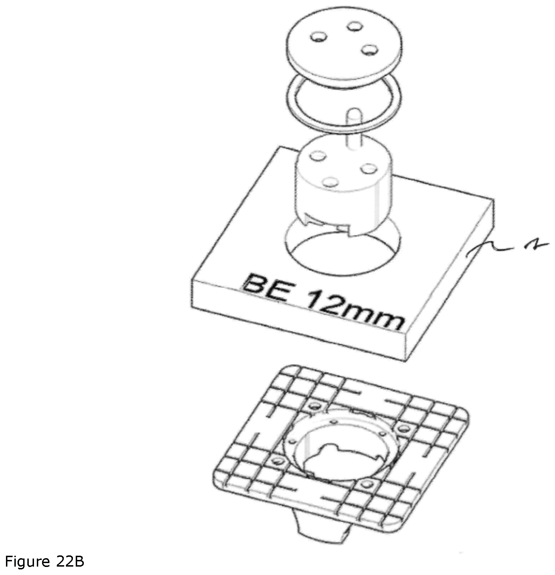

Figs. 22-24 illustrate exemplary installations. Each shows an overview of the installation:

Fig. 22A (20 mm) and 22B (12 mm): Belgian type E in installation (stone plate, metal ring, socket, holder).

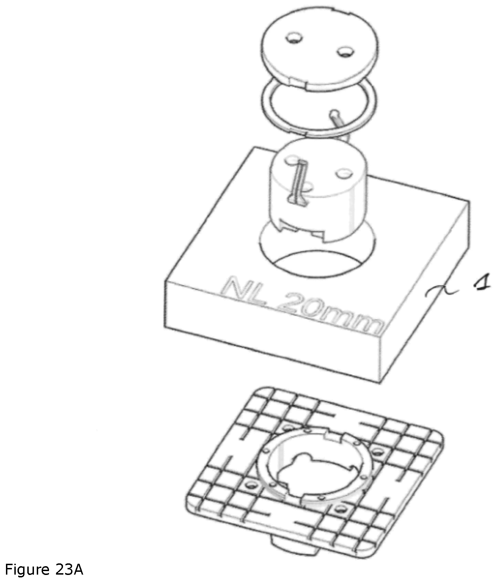

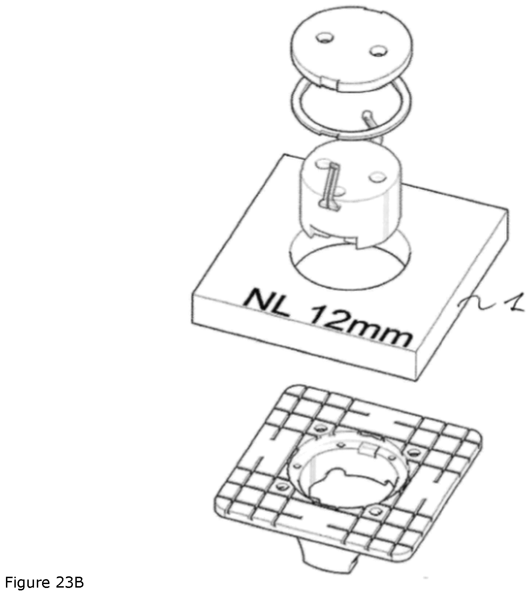

Fig. 23A (20 mm) and 23B (12 mm): Dutch type F with recesses in both stone and ring.

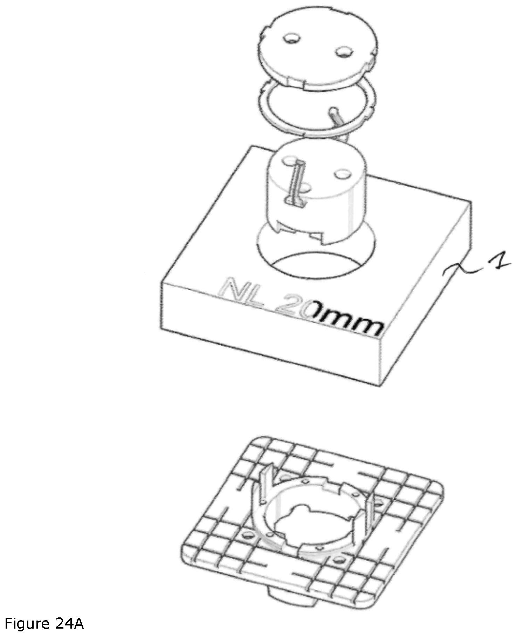

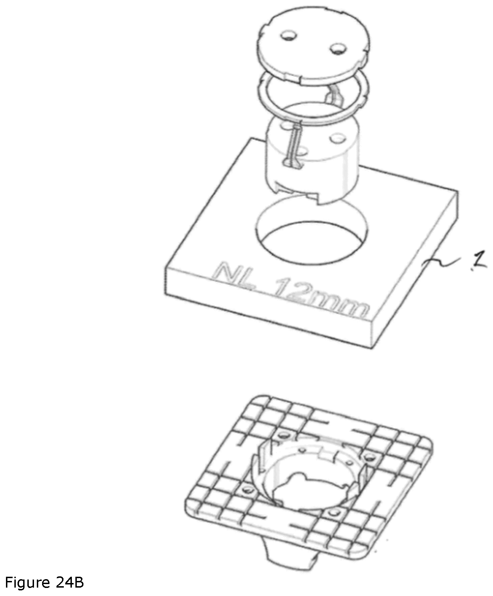

Fig. 24A (20 mm) and 24B (12 mm): Dutch type F with recesses in both stone and ring and with side guide.

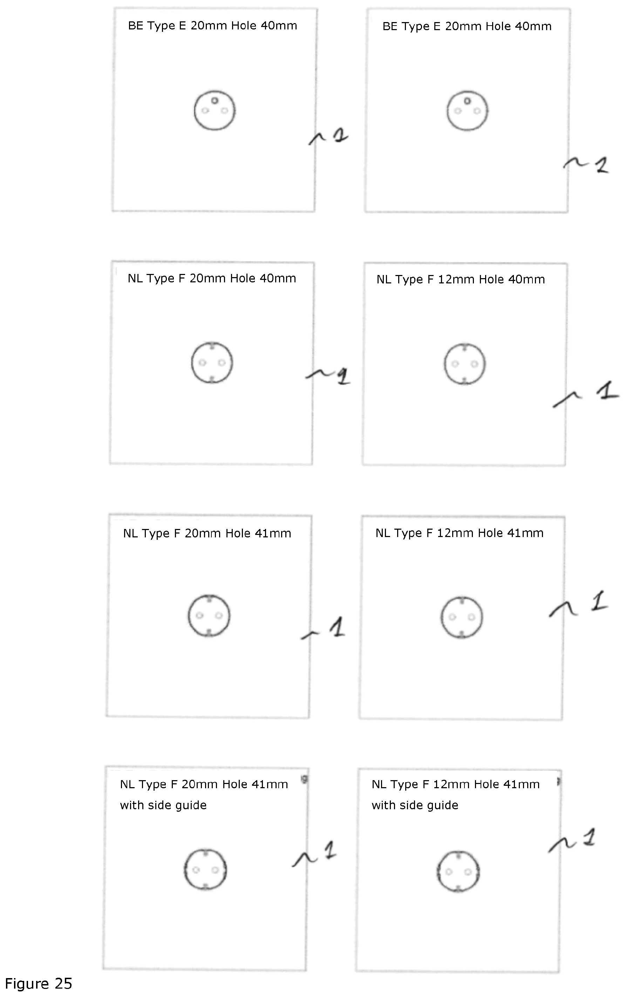

Fig. 25 shows various variants (eight in total), each with the type indicated.

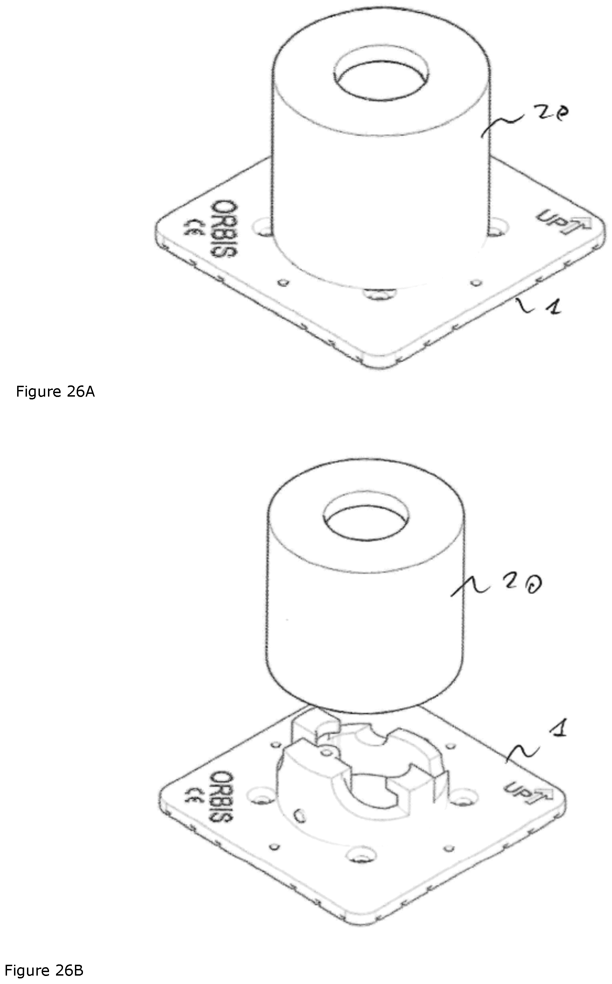

Fig. 26 shows examples with a box 20 or cover cap. Thereby Fig. 26A, Fig. 26B, Fig. 26C and Fig. 26D show various views.

Fig. 27 shows examples with a wall box 18. Thereby, Fig. 27A, Fig. 27B, Fig. 27C and Fig. 27D show various views.

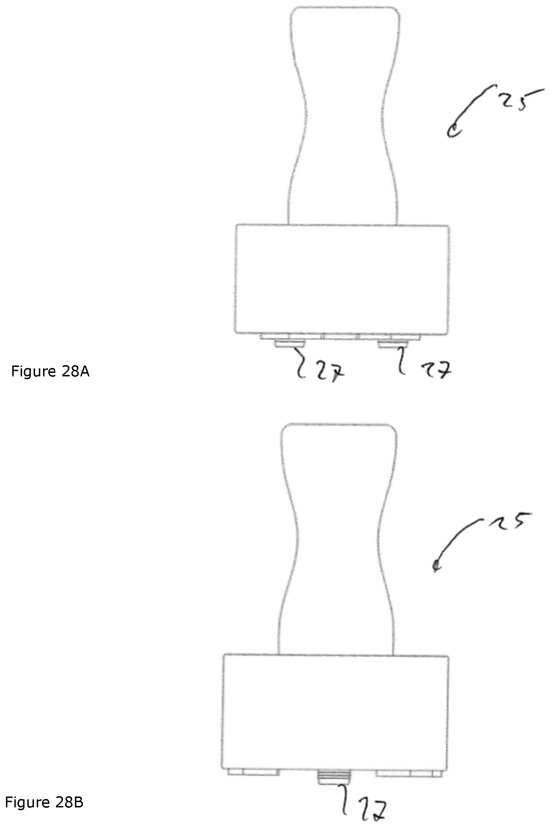

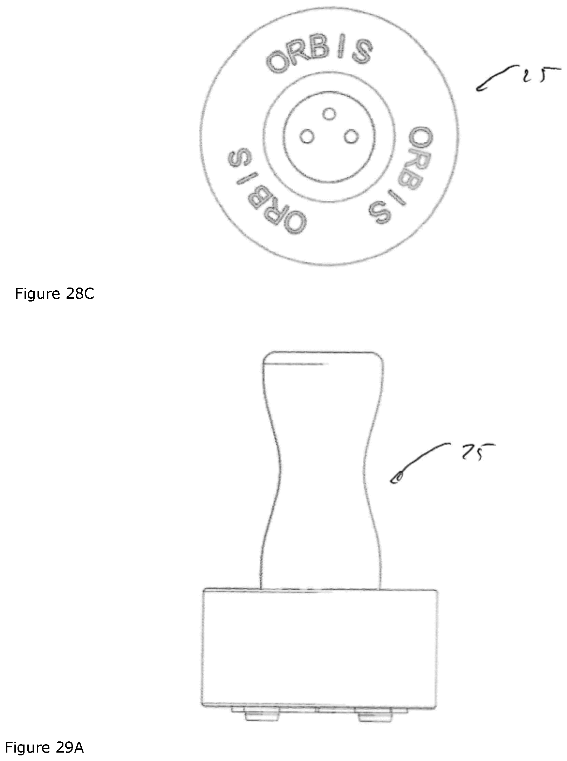

Figs. 28-30 all relate to an exemplary embodiment of a release element 25 according to the invention.

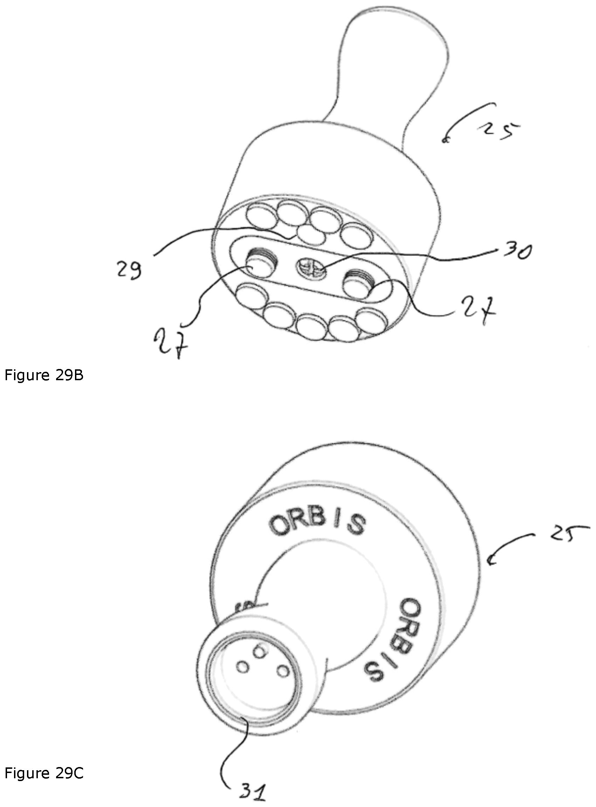

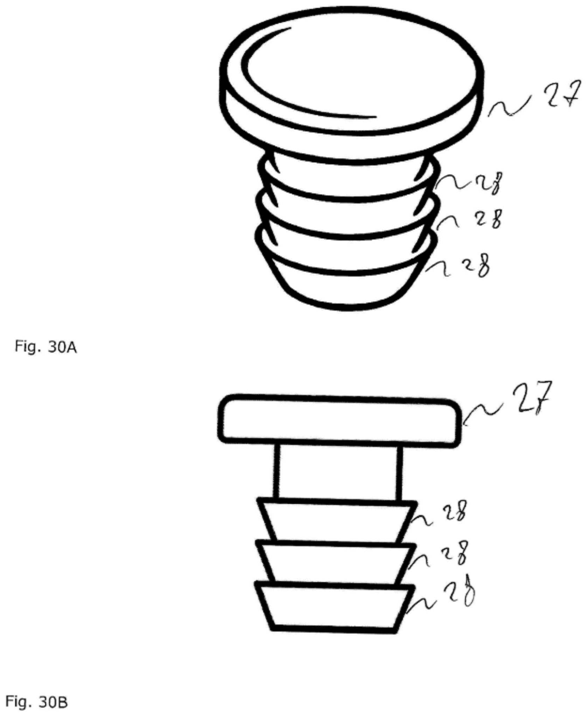

Figs. 28 and 29 show various views, with Fig. 28A, Fig. 28B, Fig. 28C and Fig. 29A, Fig. 29B, Fig. 29C. The release element comprises both two rows of magnets 24 capable of making magnetic contact with the first coupling element 8 for releasing the cover plate, and plugs 27. In doing so, the rows of magnets 24 exert a magnetic attraction on the first coupling element 8, in a direction opposite to the magnetic attraction exerted on the first coupling element by the magnets 26. The magnets 26 may thereby be arranged in a circular pattern, see for example Figure 22A, whilst the rows of magnets on the release element are arranged diametrically around the two centrally positioned plugs 27. The plugs 27 are illustrated in detail in Figure 30 and, in this case, comprise elastic plugs fitted with barbs 28 that allow for a secure grip with complementary openings in the cover plate. The plugs are, for example, elements specially developed for this purpose; variants include door dampers as known to those skilled in the art.

The release element shown in Fig. 29A-C is thereby adapted for a type E socket. A recess 29 is provided for the earth pin. The screw 30 is countersunk to protect the contact surface. A visual aid for the user 31 is provided on the head of the handle; in this case, it relates to a type E socket. This makes it clear to the user that the release element is at least suitable for a type E socket. The visual aid may resemble the socket in shape (as shown), preferably on a 1:1 scale or a scale similar to the actual socket; in variants (not shown), it consists of a flat image or text. In variants (not shown), the release element does not have a recess for an earth pin but it does have lateral recesses for earth clips to be suitable for type F. In further variants, the release element is suitable for both type E and type F, with corresponding recesses.

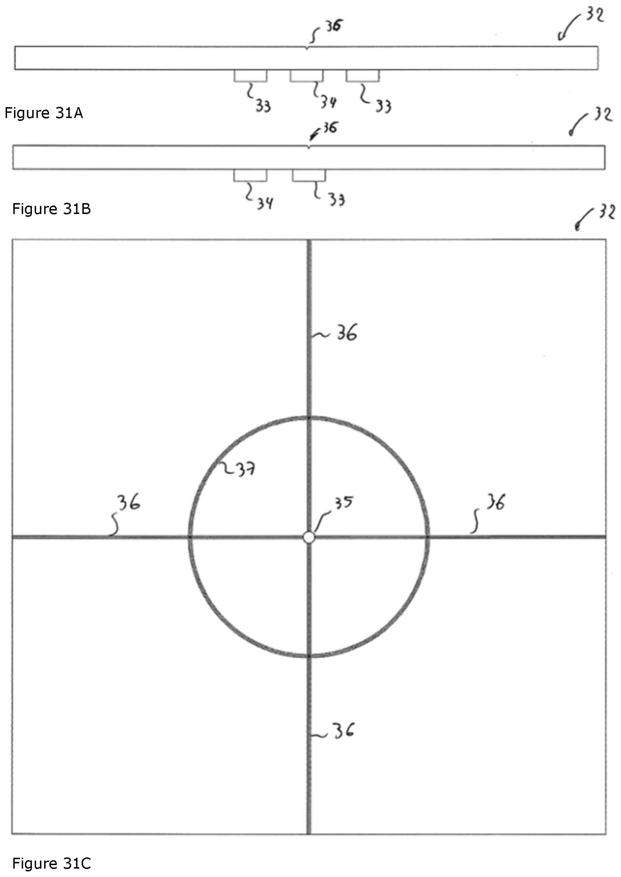

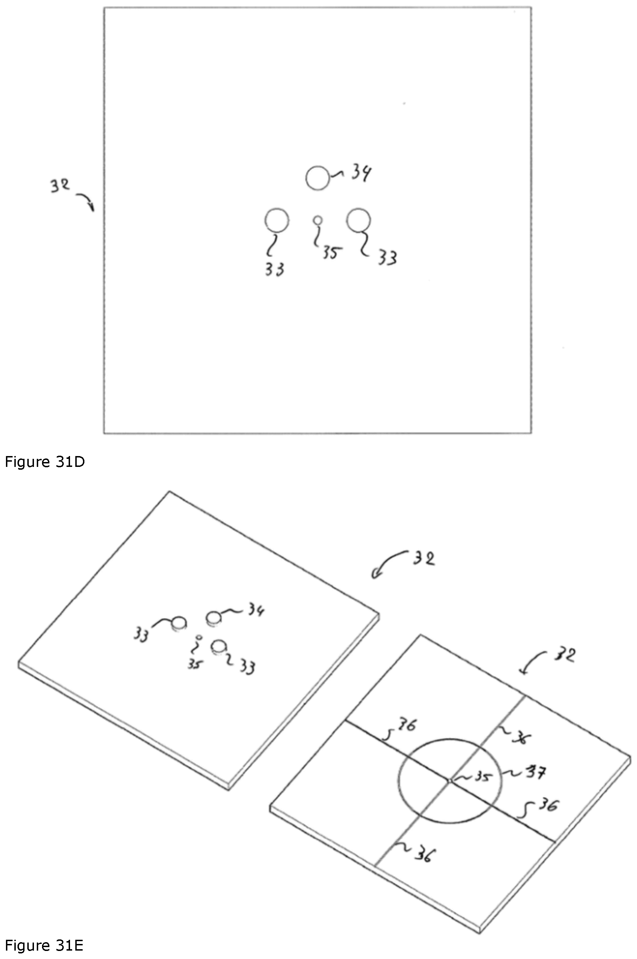

Figures 31A-E show various views of an example of a mold 32 according to the invention. This makes it possible, when providing a through-opening in the wall, to immediately manufacture an assembly comprising a wall and a cover plate, whilst maintaining a structural connection between them, for example whilst maintaining a vein pattern. This results in an aesthetic finish, whereby, for example, a vein in a stone wall that extends across the wall and over the inner surface of the through-opening continues seamlessly and continuously across the cover plate. In such cases, the cutting-out of the through-opening comprises the following steps: partially cutting-out, using a hole saw, the through-opening in a front side of the wall, wherein the cutting depth is such that a portion of the through-opening not yet cut out at the level of the rear side of the wall essentially corresponds to the thickness of the cover plate in production; providing, in the cover plate in production, at least two recesses for the passage of phase pins of a plug; applying, to the rear side of the wall and at the level of the recesses, the mold 32 which comprises a contact surface with protrusions 33 by means of which it is clamped in the recesses for the passage of phase pins for aligning the mold with the cover plate in production; applying one or more markings, comprising the application, using a drill bit, of a center mark in the cover plate, via a center opening 35 which is present in the mold; removing the mold; and cutting-out the cover plate, using the drill bit centered on the center mark. The mold further comprises a circular contour groove 37 whose diameter corresponds to that of the cover plate to be manufactured, the step of applying the one or more markings further comprises applying, using said hole saw, a contour marking in the mold, wherein alignment of the applied contour marking with the contour groove 37 is a prerequisite for cutting out the cover plate, i.e. ensuring that it is properly aligned.

The mold 32 comprises, as described, a contact surface and also a drilling surface, wherein the contact surface comprises at least the two protrusions suitable for clamping into recesses for the passage of phase pins, and the center opening which is provided halfway between the two protrusions and extends through the mold to a drilling surface. The drilling surface comprises the contour groove 37 which extends circularly across the drilling surface around the center opening. In this example, the drilling surface also comprises four radial grooves 36 which extend at 90-degree angles from the center opening; in variants, there are fewer or more radial grooves. These radial grooves provide further visual aid for alignment. The mold is made from a material suitable for applying a center mark with a drill bit at the center opening and a contour mark with a drill bit at the contour groove without damaging the drill bit of hole saw, in this example plastic, specifically PVC. The mold as shown is adapted to be suitable for a type E socket comprising an earth pin, wherein the at least two protrusions 33, 34 further comprise a third protrusion 34 for clamping into a recess of the cover plate for the passage of an earth pin. In variants (not shown), this third protrusion is absent; such a mold is then universally applicable for both type E and type F.

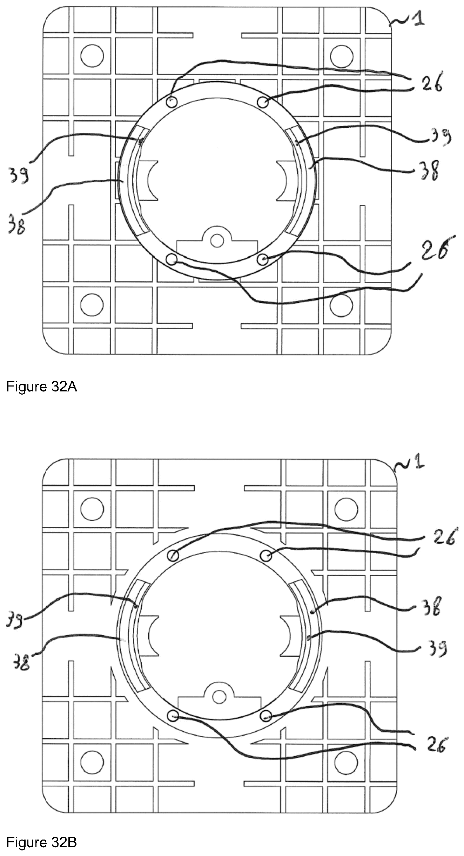

Figures 32A-37 show various views of an example in which the reinforcement 13 is multi-part. As with, for example, Fig. 22A (20 mm) and 22B (12 mm), this concerns a Belgian type E in assembly (stone plate, first coupling element, socket, holder). Unlike what is shown in Figs. 22A and 22B, the reinforcement (or the second coupling element) does not consist solely of a ring-shaped reinforcement element, corresponding to a single-part second coupling element, but is a multi-part reinforcement.

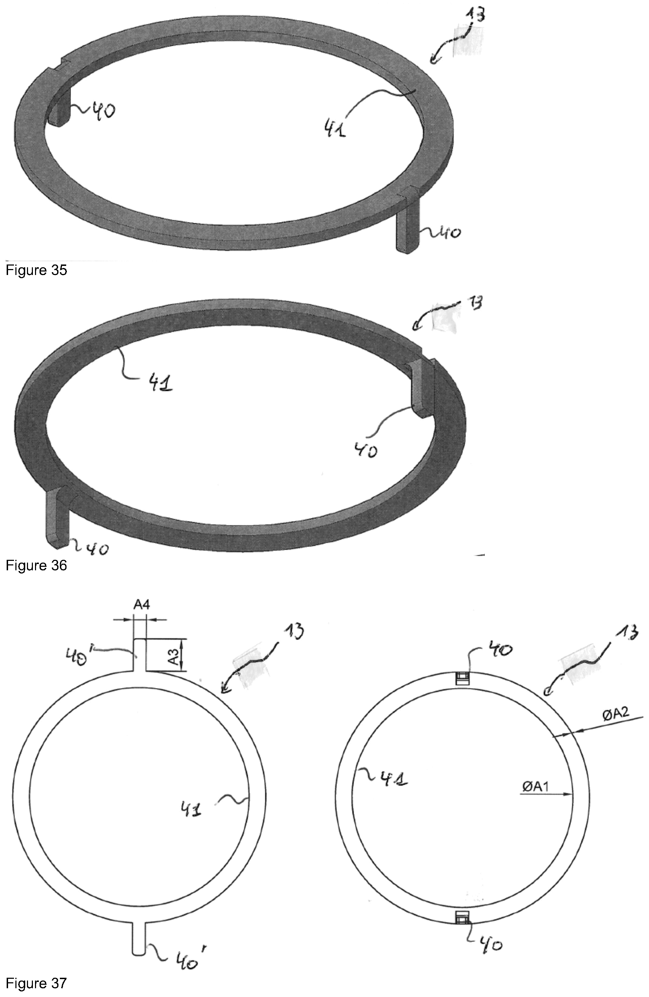

An exemplary embodiment of a multi-part reinforcement 13 is shown in Figure 35 (perspective view; front) and Figure 36 (perspective view; rear). The reinforcement 13 is shown here in an unassembled state. In the assembled state, this exemplary reinforcement forms an integral part of the cover plate. Upon assembly, the reinforcement is permanently attached to the front side of the cover plate, in this example a solid stone or stone-like disc provided with recesses for guides, by means of adhesive bonding.

The multi-part reinforcement 13 comprises said ring-shaped reinforcement element as a central body 41, wherein the reinforcement further comprises two legs 40 which extend from the central body 41 in the same leg direction perpendicular to the plane over which the central body extends. The legs contribute to the detachable connection with the built-in element, whereby these legs extend through the built-in element to achieve clamping of the cover plate to the built-in element. In this example, the legs 40 have a uniform cross-section over their entire length, which advantageously allows for a detachable connection to the built-in element by means of clamping through the tensioning of the legs (see below). In variants of this example (not considered further), the legs may, for instance, have a different cross-section at their ends, which may, for example, relate to a detachable engagement for connection with complementary means present in the built-in element.

An illustrative method of manufacturing the exemplary multi-part reinforcement is illustrated in Figure 37, in two steps.

Thereby, the left-hand illustration in Figure 37 illustrates the first step, namely the manufacturing of a suitable contour from a flat plate with a thickness d1. Exemplary dimensions for the thickness d1 are 0.6 or 0.8 or 1 or 1.2 or 1.4 mm, preferably 1 mm.

This contour comprises, first of all, the central body 41 with an inner diameter A1 and an outer diameter A2. Exemplary dimensions for the inner diameter A1 are 33, 34 or 35 mm, preferably 34 mm. Exemplary dimensions of the outer diameter A2 are 37 or 37.5 or 38 or 38.5 or 39 or 39.5 mm, preferably 39.2 mm. Furthermore, this contour also comprises protrusions 40' with length A3 and width A4. Exemplary dimensions of the length A3 are 2 or 3 or 4 or 5 or 6 or 7 mm, preferably 5 mm. Exemplary dimensions of width A4 are 1.6 or 1.8 or 2 or 2.2 or 2.4 mm, preferably 2 mm.

Furthermore, the right-hand illustration in Figure 37 illustrates the second step, namely the folding of the protrusions 40' at an angle of 90 degrees, to obtain the legs 40 and the multi-part reinforcement 13, ready for adhesive bonding with the stone disc for obtaining the reinforced cover plate.

In this example, the reinforcement consists entirely of magnetizable material, namely steel.

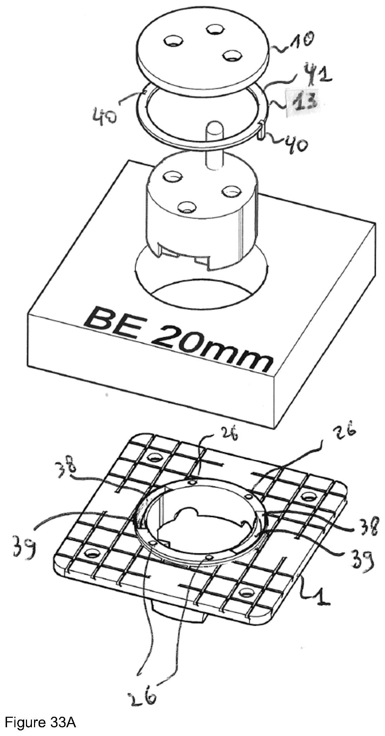

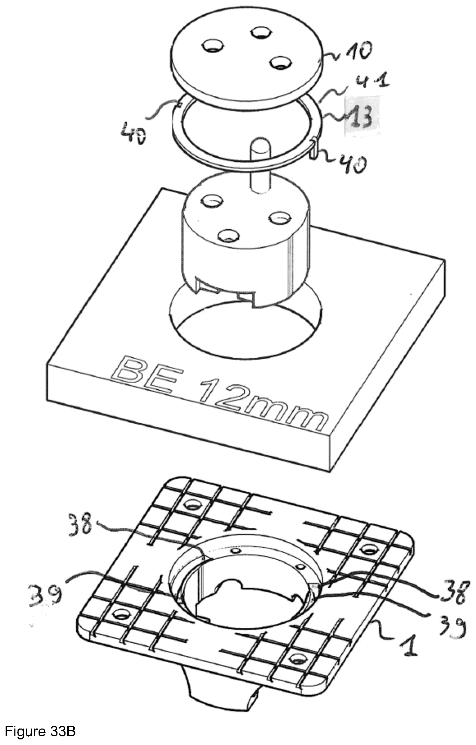

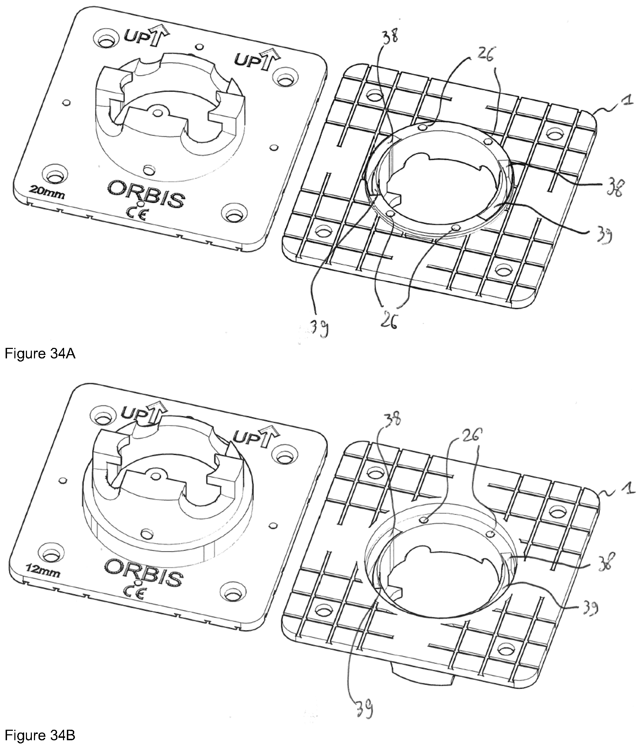

Said tensioning of the legs 40 is illustrated by Figures 32A-34B. Figures 32A (20 mm) and 32B (12 mm) show a front view of the front face of plate 1, Figures 33A (20 mm) and 33B (12 mm) show a perspective exploded view of the system during assembly, and Figures 34A (20 mm) and 34B (12 mm) show perspective views (left: bottom surface ; right: top surface) of plate 1. In this example, four magnets 26 are provided for magnetic coupling with the ring-shaped central body, on the one hand, and two recesses 38 are provided for clamping with the legs 40, on the other hand. The central body thereby functions as reinforcement, as a magnetizable element for the coupling, and as a structural connection between the legs and other parts of the cover plate. The legs 40, in turn, function as means for clamping between the cover plate and the built-in element.

Through the recesses, clamping means are shown that allow tensioning the legs 40. In this example, the tensioning means comprise conical surfaces 39 which taper wedge-shaped towards the front side of the built-in element, thereby providing a chamfer. This chamfer (as an aspect of this conical finish) allows the cover plate to be inserted smoothly, whereby the legs are inserted into the recesses 38 and gradually tightened against the chamfer. The provision of the recesses may involve a slightly greater depth for the built-in element compared to versions without such recesses, as shown in Fig. 22A (20 mm) and 22B (12 mm).

In variants of this example (not shown), the tensioning means relate to surface roughness of the legs and/or a surface of the built-in element with which the legs make contact during assembly.

In this example, the recesses 38 extend over part of a ring-shaped contour, in this example the ring-shaped contour of the first coupling element. In relation to this, the chamfer relates to conical surfaces 39. Due to the advantageous shape of the recesses and the conical surface, the cover plate can thereby pivot through a certain angle, which simplifies positioning during assembly. This is particularly advantageous if the front side of the cover plate features a pattern (e.g. a vein structure) which must correspond to the pattern of the wall. Indeed, this ensures that, during installation, the cover plate can be rotated slightly relative to the built-in element. This can therefore lead to better tolerance during installation.

It is understood that the present invention is not limited to the embodiments described above and that certain modifications or alterations may be made to the described examples without re-evaluating the appended claims or Points. For example, the present invention has been described with reference to stone, but it should be clear that the invention can be applied to, for example, other types of material. Furthermore, this document refers to core functionality for embodiments with magnetic coupling, but the detachable connection and release may equally, depending on variants, be based partly or even entirely on clamping, which may involve the provision of a clamping element and/or plugs.

## Claims

1. A system for installing a socket into a wall with a through-opening, comprising:
a. a built-in element, the built-in element comprising a plate with a front side and a rear side, and a passage, which passage extends from the front side to the rear side of the plate, the passage being dimensioned to accommodate a socket, and wherein the built-in element further comprises a receiving element, wherein the front side of the plate is adapted for attachment to the rear side of the stone or stone-like wall, with the passage aligned with the through-opening of the wall, wherein the receiving element extends around the passage on the rear side;
b. a socket, suitable for detachable connection within the passage of the built-in element, the socket comprising a front side and a rear side, the rear side comprising contact points for electrically connecting electrical wiring to the socket, and the front side comprising a coupling suitable for receiving a plug, wherein the socket comprises a screw opening for receiving a screw and coupling the socket to the receiving element by means of the screw;
c. a cover plate dimensioned to cover the front side of the socket in the built-in element and to be recessed within the wall opening;
wherein the receiving element is adapted to detachably receive the socket and to connect the socket to the receiving element, preferably by means of a screw;
**characterized in that** the cover plate comprises a front side, and that the built-in element and the cover plate are provided with means for detachably connecting to one another; wherein the cover plate comprises, at a rear side, a reinforcement for structural integrity of the cover plate, wherein said reinforcement comprises a reinforcement element which is ring-shaped and has an outer perimeter which substantially matches the outer perimeter of the front side of the socket; wherein said means for detachably connecting relate to clamping and/of magnetically coupling said reinforcement to said built-in element.

2. The system according to claim 1, wherein said detachable connection relates to at least clamping of the reinforcement to the built-in element.

3. The system according to claim 2, wherein said clamping relates to a diameter of the ring-shaped reinforcement element being matched to a diameter of a through-opening such that, upon insertion of the cover plate into the through-opening, it is clamped in the through-opening.

4. The system according to claim 2, wherein the reinforcement comprises said ring-shaped reinforcement element as a central body, wherein the reinforcement further comprises a plurality of legs extending from the central body; and wherein said detachable connection relates to the extension of the respective legs through the built-in element to realize said clamping.

5. The system according to claim 1, wherein said detachable connection relates to at least the magnetic coupling of the reinforcement to the built-in element; wherein said magnetic coupling relates to connecting a first coupling element and said ring-shaped reinforcement element as a second coupling element, wherein the built-in element is provided with the first coupling element at the front side; wherein the ring-shaped reinforcement element is magnetizable and the first coupling element is magnetic; and wherein the first coupling element and the second coupling element are configured for magnetic coupling to one another.

6. The system according to claims 3 to 5, wherein said ring-shaped reinforcement element is magnetizable, wherein said clamping relates to both said magnetic coupling and said clamping, and wherein the front side of the cover plate is made of stone or is stone-like.

7. The system according to claim 6, wherein a diameter of said cover plate comprising said reinforcement is no greater than 41 mm.

8. The system according to one of the preceding claims 1 to 7, **characterized in that** the system further comprises a release element suitable for decoupling the cover plate which is coupled to the built-in element, wherein said release element relates to the release of a clamping and/or the release of a magnetic coupling.

9. The system according to claim 8, wherein said release element relates at least to the release of a clamping action by matching a diameter of the cover plate to a diameter of a through-opening such that, upon insertion of the cover plate into the through-opening, it is clamped in the through-opening, and wherein said release element comprises respective plugs, preferably elastic plugs, which are shaped to engage in respective recesses belonging to the cover plate and associated with respective contact sockets belonging to the socket, wherein said release is at least partly based on the clamping of the plugs.

10. The system according to claim 10, wherein said plugs relate to door dampers.

11. A method for installing a socket into a wall with a through-opening, comprising the following steps:
a. providing a through-opening into a wall, preferably a stone or stone-like plate or tile;
b. attaching a built-in element to the rear side of the wall, wherein the built-in element comprises a plate having a front side, rear side and a passage extending from the front side to the rear side of the plate, wherein the built-in element further comprises a receiving element, wherein the passage and the through-opening are substantially aligned, and wherein the plate is secured to the rear side of the wall, preferably by adhesive bonding;
c. inserting a socket through the through-opening and through the passage and connecting said socket to the receiving element;
d. placing a cover plate in the through-opening against the front side of the socket to cover the front side of the socket;
**characterized in that** the cover plate comprises a front side, and that the built-in element and the cover plate are provided with means for detachable connection to one another,
the method further comprising a step of securing the cover plate to the built-in element by means of the means for detachable connection, **characterized in that** the built-in element, socket and cover plate constitute a system according to one of the preceding claims 1 to 10.

12. A use of a system according to any one of the preceding claims 1 to 10 for installing a socket into a wall, wherein the socket is covered.

13. A release element suitable for use in a system according to any one of the preceding claims 1 to 10, wherein said release element comprises at least plugs.

14. A cover plate suitable for use in a system according to claims 1 to 10, said cover plate being dimensioned to cover the front side of a socket in a built-in element; said cover plate comprising a front side and means for releasably connecting to the built-in element; wherein the cover plate comprises, at a rear side, a reinforcement for structural integrity of the cover plate, wherein said reinforcement comprises a reinforcement element which is ring-shaped, and has an outer perimeter which substantially matches the outer perimeter of the front side of the socket; wherein said means for detachably connecting are related to clamping and/or magnetic coupling of said reinforcement to said built-in element; wherein said ring-shaped reinforcement element is magnetizable; wherein the front side of the cover plate is stone or stone-like; and wherein a diameter of said cover plate comprising said reinforcement is no greater than 41 mm.

15. The cover plate according to claim 14, wherein the reinforcement comprises said ring-shaped reinforcement element as a central body, wherein the reinforcement further comprises a plurality of legs extending from the central body; and wherein said detachable connection relates to the extension of the respective legs through the built-in element to realize said clamping.
